# EUROPEAN PATENT APPLICATION

(11) **EP 4 668 118 A1**
(43) Date of publication of application: **24.12.2025**
(21) Application number: 23939762.3
(22) Date of filing: 04.09.2023
(51) Int. Cl.: G06F 11/07, G06F 11/34, H04L 41/0631, H04W 24/00

(54) **MONITORING SYSTEM, MONITORING METHOD, AND PROGRAM**

(30) Priority: 26.05.2023 JP 2023086761; 26.07.2023 JP 2023121540
(71) Applicant: Rakuten Group, Inc., Setagaya-ku Tokyo 158-0094 (JP)
(72) Inventor: FUJIOKA, Kengo, Tokyo 158-0094 (JP); HASEGAWA, Daichi, Tokyo 158-0094 (JP); NISHIMURA, Ryo, Tokyo 158-0094 (JP); FUJII, Taisuke, Tokyo 158-0094 (JP)
(74) Representative: EIP
(86) International application number: PCT/JP2023/032214
(87) International publication number: WO 2024/247293

(57) **Abstract**

A state data acquisition module (101) of a monitoring system (1) is configured to acquire state data relating to a change in a state of a device that is a monitoring target in a service. The monitoring system (1) is configured to execute processing relating to an anomaly in the service based on the state data.

## Description

### Technical Field

The present disclosure relates to a monitoring system, a monitoring method, and a program.

### Background Art

Hitherto, state data relating to a state of a device being a monitoring target has been analyzed for various purposes such as detection of an anomaly, recovery, or analysis in a service. For example, in Patent Literature 1, there is described a system that determines presence or absence of an anomaly of a certain device based on a model that has learned a relationship between a time-series change in a state indicated by state data of this device and an actual operation state of this device. In Patent Literature 2, there is described a system that estimates whether or not a future memory usage amount of a device exceeds a threshold value based on a history of the memory usage amount of this device in the past and a current memory usage amount of this device. For example, in Patent Literature 3, there is described a technology in which, when a failure (an example of an anomaly) has occurred in a system, an effective recovery procedure for recovery from the failure that has occurred in this system is identified based on a calculation model that calculates a degree of relevance between state data relating to a state of a device in this system and the recovery procedure for recovery from the failure that has occurred in this system.

### Citation List

### Patent Literature

[PTL 1] WO 2017/169949 A1
[PTL 2] JP 2022-511938 A
[PTL 3] JP 2021-015321 A

### Summary of Invention

### Technical Problem

The technologies as described above are required to execute processing relating to an anomaly in a service based on the state data relating to the state of the device being the monitoring target in the service.

One object of the present disclosure is to execute processing relating to an anomaly in a service based on state data relating to a state of a device being a monitoring target in the service.

### Solution to Problem

According to one embodiment of the present disclosure, there is provided a monitoring system including: a state data acquisition module configured to acquire state data relating to a state of a device that is a monitoring target in a service. The monitoring system is configured to execute processing relating to an anomaly in the service based on the state data.

### Advantageous Effects of Invention

According to the embodiment of the present disclosure, the processing relating to the anomaly in the service can be executed based on the state data relating to the state of the device being the monitoring target in the service.

### Brief Description of Drawings

FIG. 1 is a diagram for illustrating an example of a hardware configuration of a monitoring system.
FIG. 2 is a graph for showing an example of a time-series change in a communication amount of communication devices in a case in which an anomaly has not occurred in a communication service.
FIG. 3 is a graph for showing an example of the time-series change in the communication amount of the communication devices in a case in which the anomaly has been detected in the communication service.
FIG. 4 is a view for illustrating an example of a notification displayed on an administrator terminal.
FIG. 5 is a diagram for illustrating an example of functions implemented in the monitoring system.
FIG. 6 is a table for showing an example of a state database.
FIG. 7 is a time chart for showing an example of periods set by a period setting module.
FIG. 8 is a flowchart for illustrating an example of processing executed in the monitoring system.
FIG. 9 is a diagram for illustrating an example of functions implemented in the monitoring system of Modification Example 1-1.
FIG. 10 includes graphs for showing an example of the time-series change in the communication amount of the communication devices in a case in which the anomaly has been detected in the communication service.
FIG. 11 is a view for illustrating an example of the notification displayed on the administrator terminal.
FIG. 12 is a diagram for illustrating an example of functions implemented in the monitoring system.
FIG. 13 is a table for showing an example of the state database.
FIG. 14 is a view for illustrating an example of an execution result of clustering.
FIG. 15 is a flowchart for illustrating an example of processing executed in the monitoring system.
FIG. 16 is a diagram for illustrating an example of functions implemented in the monitoring system in modification examples.

### Description of Embodiments

### [1. First Embodiment]

A first embodiment being an example of an embodiment of a monitoring system according to the present disclosure is described. In the first embodiment, an example of processing relating to an anomaly in a service is described. In related arts, various pieces of state data of various devices exist. Thus, when a provider of a service can identify state data related to an anomaly in the service, the identified state data can be used for various purposes such as detection of the anomaly, recovery, or analysis in the service, and hence this identification is very useful. However, the related arts cannot identify the state data related to the anomaly from among various pieces of state data relating to a state of the devices. Thus, the monitoring system of the first embodiment determines whether or not the state data is related to the anomaly in a service.

### [1-1. Hardware Configuration of Monitoring System]

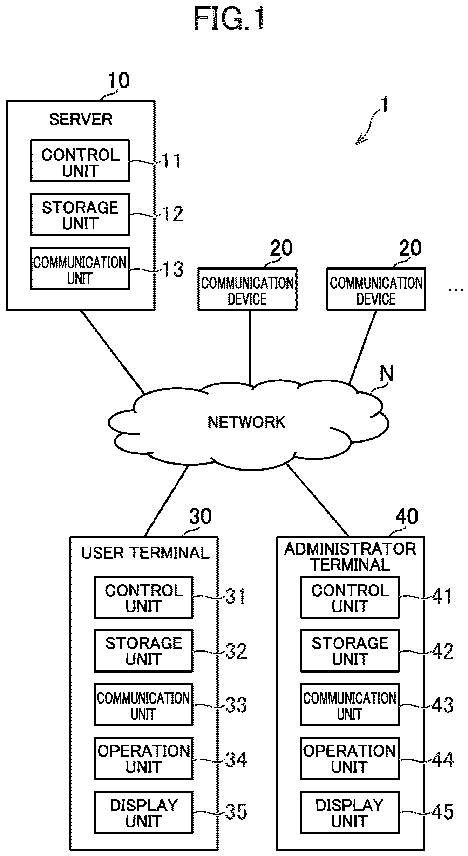

FIG. 1 is a diagram for illustrating an example of a hardware configuration of the monitoring system. For example, a monitoring system 1 includes a server 10, a communication device 20, a user terminal 30, and an administrator terminal 40. Each of the server 10, the communication device 20, the user terminal 30, and the administrator terminal 40 can be connected to a network N. The network N is, for example, the Internet, a public communication line, or a LAN.

The server 10 is a server computer. In this embodiment, a case in which a telecommunications carrier manages the server 10 is exemplified. For example, the server 10 includes a control unit 11, a storage unit 12, and a communication unit 13. The control unit 11 includes at least one processor. The storage unit 12 includes at least one of a volatile memory such as a RAM or a nonvolatile memory such as a flash memory. The communication unit 13 includes at least one of a communication interface for wired communication or a communication interface for wireless communication.

The communication device 20 is a device which communicates to and from another device. For example, the communication device 20 is a device managed by the telecommunications carrier. The communication device 20 may be a device for wireless communication or a device for wired communication. The communication device 20 relays at least one of call or data communication by a user. For example, the communication device 20 is a base station of a public communication line, a private branch exchange, an access point of a wireless LAN, a router, a hub, a repeater, a modem, or a server computer used in a virtualization technology. The communication device 20 may be a device of a telecommunications carrier which provides a full virtualization cloud-native mobile network to the user.

The user terminal 30 is a computer of the user using a communication service. For example, the user terminal 30 is a smartphone, a tablet computer, a personal computer, or a wearable terminal. For example, the user terminal 30 includes a control unit 31, a storage unit 32, a communication unit 33, an operation unit 34, and a display unit 35. Hardware configurations of the control unit 31, the storage unit 32, and the communication unit 33 may be the same as those of the control unit 11, the storage unit 12, and the communication unit 13, respectively. The operation unit 34 is an input device, such as a touch panel or a mouse. The display unit 35 is a display, such as a liquid crystal display or an organic EL display.

The administrator terminal 40 is a computer of an administrator in the communication service. For example, the administrator terminal 40 is a smartphone, a tablet computer, a personal computer, or a wearable terminal. For example, the administrator terminal 40 includes a control unit 41, a storage unit 42, a communication unit 43, an operation unit 44, and a display unit 45. Hardware configurations of the control unit 41, the storage unit 42, the communication unit 43, the operation unit 44, and the display unit 45 may be the same as those of the control unit 11, the storage unit 12, the communication unit 13, the operation unit 34, and the display unit 35, respectively.

Programs stored in the storage units 12, 32, and 42 may be supplied via the network N. Moreover, each computer may include at least one of a reading unit (for example, a memory card slot) for reading a computer-readable information storage medium or an input/output unit (for example, a USB port) for inputting/outputting data from/to an external device. For example, a program stored in an information storage medium may be supplied via at least one of the reading unit or the input/output unit.

Moreover, the monitoring system 1 is only required to include at least one computer, and is not limited to the example of FIG. 1. For example, at least one of the communication device 20, the user terminal 30, or the administrator terminal 40 may be absent in the monitoring system 1. In this case, this at least one exists outside the monitoring system 1. The monitoring system 1 may include only the server 10. The monitoring system 1 may include the server 10 and another computer that is not illustrated in FIG. 1. The monitoring system 1 may include only the administrator terminal 40. The monitoring system 1 may include the administrator terminal 40 and another computer that is not illustrated in FIG. 1.

### [1-2. Overview of Monitoring System]

In this embodiment, a case in which the communication device 20 is a server computer which has a containerized network function (CNF) is exemplified. Further, a case in which the user terminal 30 is a smartphone is exemplified. The communication device 20 relays the communication of a large number of user terminals 30. For example, when a communication amount to be processed by the communication device 20 reaches a communication amount that can be processed by this communication device 20, the anomaly possibly occurs in the communication service. The communication amount can be expressed by a publicly-known index such as bps.

For example, when the anomaly occurs in the communication service, the administrator identifies the communication device 20 being a factor in the anomaly, to thereby execute recovery work. However, in the communication service, a large number of communication devices 20 exist and various anomalies possibly occur. Thus, it is sometimes difficult for the administrator to identify the communication device 20 being a factor in the anomaly. At this time, the communication device 20 being a factor in the anomaly cannot handle more communication, and hence a communication amount is sometimes saturated.

That phrase "the communication amount is saturated" means that a state in which the communication amount is positive (state in which the communication amount is not 0) is made and the communication amount does not change or does not substantially change. That phrase "the communication amount does not change" means that a change amount of the communication amount is 0. That phrase "the communication amount does not substantially change" means that the change amount of the communication amount is smaller than a threshold value. A specific determination method for the saturation is described later. An upper limit value may be defined for the communication amount. However, there is a case in which the communication device 20 can process a communication amount larger than the upper limit value defined by the administrator. There is also a case in which the communication device 20 can process only a communication amount smaller than the upper limit value defined by the administrator. Moreover, there is also a case in which the administrator itself does not know the upper limit value of the communication device 20. Thus, in this embodiment, it is assumed that the upper limit value of the communication amount is not defined. Thus, it is assumed that the anomaly is not always detected even when the communication amount of the communication device 20 reaches a certain amount.

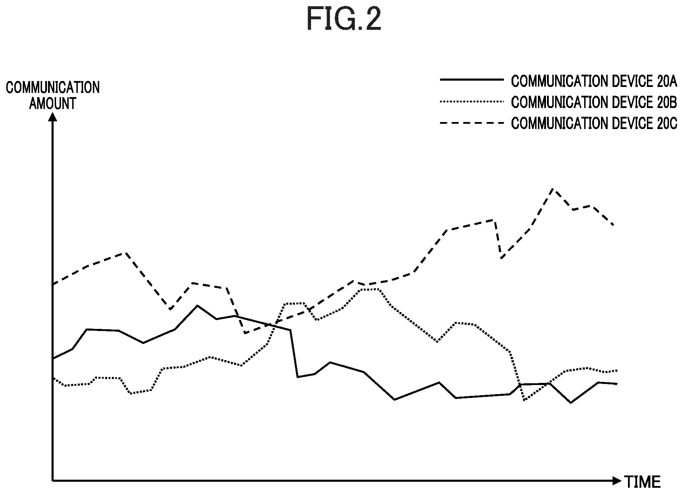

FIG. 2 is a graph for showing an example of a time-series change in the communication amount of the communication devices 20 in a case in which the anomaly has not occurred in the communication service. The horizontal axis of FIG. 2 is an axis indicating the time. The vertical axis of FIG. 2 is an axis indicating the communication amount. In the example of FIG. 2, a change in the communication amount of each of three communication devices 20A to 20C disposed in a facility of a telecommunications carrier is shown. The communication devices 20A to 20C are hereinafter referred to simply as "communication device 20" when being not discriminated from each other. As shown in FIG. 2, the communication amount of each communication device 20 is not saturated when the anomaly has not occurred in the communication service. That is, the communication amount of each communication device 20 always changes in principle.

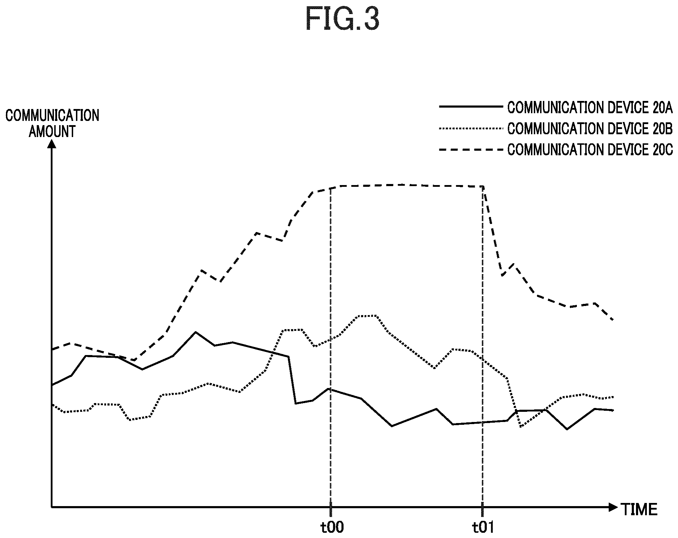

FIG. 3 is a graph for showing an example of the time-series change in the communication amount of the communication devices 20 in a case in which the anomaly has been detected in the communication service. In the example of FIG. 3, the communication amount of the communication device 20C is saturated in a period from a time point t00 to a time point t01. In this period, the communication device 20C cannot process more communication, and hence there is a possibility that the user terminal 30 that has attempted to connect to the communication device 20C in a certain area cannot use the communication service. In such a case, the user sometimes contacts a call center of the communication service to convey that the communication service is unavailable.

For example, an administrator receives inquiries from a plurality of users to understand the occurrence of the anomaly. It is assumed that the administrator has not identified, at this time point, the communication device 20 being a factor in the anomaly and then, after the time point t01 arrives, the communication amount of the communication device 20C lowers and the anomaly is resolved by itself. Further, it is assumed that the administrator identifies that the anomaly has been resolved, when no longer receiving the inquiries from the users. When the time point t01 arrives, the user terminal 30 becomes capable of using the communication service. Thus, a correlation exists between the period in which the anomaly has occurred and the communication amount of the communication device 20C. In this embodiment, a period from a saturation start timing to a saturation end timing is treated as an example of the period in which the anomaly has occurred. A period from the saturation start timing to a current time point at which the saturation has not ended may be treated as an example of the period in which the anomaly has occurred. For example, a period from the saturation start timing to a time point specified by the administrator may be treated as an example of the period in which the anomaly has occurred.

For example, the server 10 analyzes the communication amount of each of the communication devices 20A to 20C after the anomaly has occurred and been resolved. The server 10 identifies that the communication amount of the communication device 20C has been saturated in the period in which the anomaly has occurred. The server 10 associates features of the anomaly that has occurred this time with relevance of the communication amount of the communication device 20C to this anomaly, and stores the associated information. When a similar anomaly occurs again, the server 10 transmits, to the administrator terminal 40, a notification of prompting checking of a state of the communication device 20C.

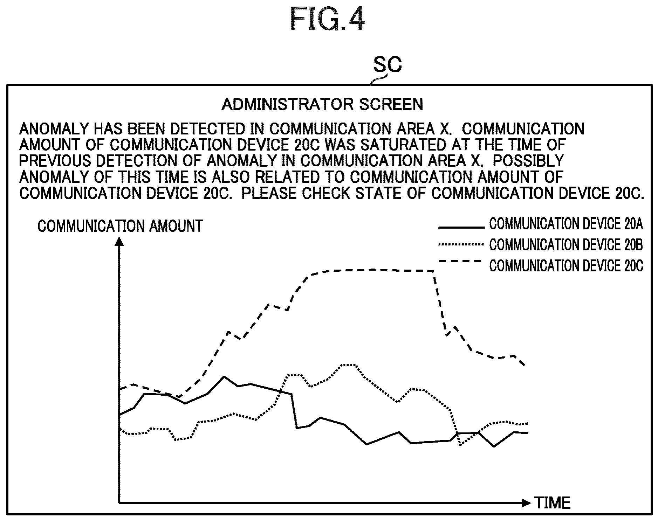

FIG. 4 is a view for illustrating an example of the notification displayed on the administrator terminal 40. For example, when the administrator activates a maintenance tool installed on the administrator terminal 40, an administrator screen SC showing the notification received from the server 10 is displayed on the display unit 45. The administrator screen SC displays a message showing checking of the state of the communication device 20C also this time because the communication amount of the communication device 20C was saturated when a similar anomaly was detected in the past.

For example, it is assumed that a call center of the communication service received an inquiry from a user who attempted to use the communication service from a certain area X when the communication amount of the communication device 20C was saturated in the past. When, at a current time point, the call center receives an inquiry from a user who has attempted to use the communication service from the same area X, occurrence of an anomaly in the communication service in the area X is detected. In this case, the server 10 transmits, to the administrator terminal 40, display data of the administrator screen SC prompting checking of the state of the communication device 20C.

For example, when the administrator terminal 40 receives the display data of the administrator screen SC, the administrator terminal 40 displays, on the display unit 45, the administrator screen SC including a message prompting checking of the state of the communication device 20C. In the administrator screen SC, a graph showing a current communication amount of the communication device 20C may be displayed, or a graph showing the communication amount of the communication device 20C when a similar anomaly occurred in the past may be displayed. The administrator checks the administrator screen SC to perform maintenance of the communication device 20C. The maintenance itself of the communication device 20C may be executed through a publicly-known method.

As described above, the monitoring system 1 determines whether or not the communication amount of the communication device 20 has been saturated when the anomaly has occurred and recovery has been completed in the communication service. The monitoring system 1 determines whether or not the communication amount of the communication device 20 is related to the anomaly in the communication service based on a determination result of whether or not the communication amount of the communication device 20 has been saturated. For example, it becomes easier for the administrator to identify the communication device 20 being a factor in an anomaly when a similar anomaly occurs again, and it becomes possible for the administrator to quickly perform recovery work. Details of this embodiment are now described.

### [1-3. Functions Implemented in Monitoring System]

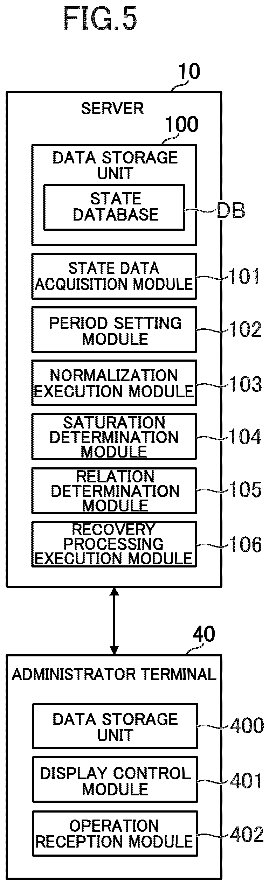

FIG. 5 is a diagram for illustrating an example of functions implemented in the monitoring system 1. In FIG. 5, functions implemented in the server 10 and functions implemented in the administrator terminal 40 are illustrated. Functions of each of the communication device 20 and the user terminal 30 are the same as functions in a publicly-known communication service, and are thus omitted in FIG. 5. For example, the communication device 20 has a function of transmitting state data to be described later or information on part of the state data to the server 10. The user terminal 30 has functions for a user to use the communication service.

### [1-3-1. Functions Implemented in Server]

For example, the server 10 includes a data storage unit 100, a state data acquisition module 101, a period setting module 102, a normalization execution module 103, a saturation determination module 104, a relation determination module 105, and a recovery processing execution module 106. The data storage unit 100 is implemented by the storage unit 12. The state data acquisition module 101, the period setting module 102, the normalization execution module 103, the saturation determination module 104, the relation determination module 105, and the recovery processing execution module 106 are implemented by the control unit 11.

### [Data Storage Unit]

The data storage unit 100 stores data relating to the communication service. For example, the data storage unit 100 stores a state database DB.

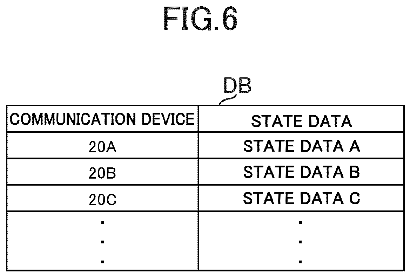

FIG. 6 is a table for showing an example of the state database DB. The state database DB is a database in which state data of each of the plurality of communication devices 20 is stored. For example, identification information of each of the plurality of communication devices 20 and the state data indicating a state of the communication device 20 are stored in the state database **DB.** Other kinds of data may be stored in the state database DB. For example, information indicating a determination result obtained by the saturation determination module or information indicating a determination result obtained by the relation determination module may be stored in the state database **DB.**

The identification information of the communication device 20 may be any information, and may be, for example, an IP address, a device name, or a MAC address. The state data may indicate a pinpoint state of the communication device 20 at a certain time point, but in this embodiment, the state data is data relating to a time-series change in the state of the communication device 20. The state of the communication device 20 may also be considered as a load on the communication device 20. The state of the communication device 20 may mean a hardware state, or may mean a software state.

In this embodiment, a case in which the communication amount of the communication device 20 corresponds to the state of the communication device 20 is exemplified, but another state of the communication device 20 may correspond to the state of the communication device 20. As the another state, a consumption amount of resources of the communication device 20, a processing time of a request for a service (response time), or the number of errors returned in response to the request may be employed. The state data may be an index called golden signal metrics, or another index used in a publicly-known benchmark test. For example, the state data may be a CPU usage amount, a memory usage amount, a power consumption amount, a communication speed, a temperature, or a combination thereof.

The state data may indicate a state relating to a track record in the communication service or another service. The another service is a service used by a user through the communication service, and is, for example, an electronic commerce service, a travel reservation service, a payment service, or a financial service. For example, the state data may be the number of users who are currently connected to the communication device 20 (who have currently logged into the communication service or the another service), payment executed by users via the communication device 20, or orders made by users via the communication device 20. The load on the communication device 20 increases as the number of times of payment, a payment amount, the number of orders, and an order amount increase. Thus, the number of times of payment, the payment amount, the number of orders, and the order amount also correspond to the state of the communication device 20.

In this embodiment, the time-series change in the state of the communication device 20 is shown in the state data. For example, the state data includes a date and time on which the state of the communication device 20 has been acquired and a numerical value indicating the state of the communication device 20 on this date and time. The state of the communication device 20 may be expressed by not the numerical value but another format such as characters. In this embodiment, the communication amount of the communication device 20 corresponds to the state of the communication device 20. Thus, the state data includes the date and time on which the communication amount of the communication device 20 has been acquired, and the communication amount of the communication device 20 on this date and time.

The data stored in the data storage unit 100 is not limited to the state database DB. The data storage unit 100 is only required to store certain data relating to the communication service. For example, the data storage unit 100 may store data indicating a determination result obtained by the saturation determination module 104. The data storage unit 100 may store data indicating a determination result obtained by the relation determination module 105. The data storage unit 100 may store data required for displaying the administrator screen SC on the administrator terminal 40. The data storage unit 100 may store various threshold values used in processing to be described later. The threshold values may be specified by the administrator, or may be decided based on a method of machine learning or a statistical method.

### [State Data Acquisition Module]

The state data acquisition module 101 acquires the state data. For example, the state data acquisition module 101 requests each of the plurality of communication devices 20 to transmit the state of the communication device 20, periodically (for example, every approximately one to thirty seconds or approximately one to five minutes). When the communication device 20 receives the request made by the state data acquisition module 101 from the server 10, the communication device 20 transmits its own identification information and information indicating its own state to the server 10. The state data acquisition module 101 adds a current date and time and the information received from the communication device 20 to the state data associated with the identification information of this communication device 20.

The communication device 20 may accumulate the state data in a period of a certain length, and transmit the state data to the server 10 at a time. In this case, the state data acquisition module 101 acquires the state data from the communication device 20 at a time, and stores the state data in the state database DB. As another example, the state data acquisition module 101 may irregularly acquire the state data from the communication device 20, instead of periodically. The state data acquisition module 101 may acquire the state data from the communication device 20 at a timing specified by the administrator.

The communication device 20 is an example of a device being a monitoring target in the communication service. The device being the monitoring target may be any device, and is not limited to the communication device 20. The term "communication device 20" as used in this embodiment can be read as "another device being the monitoring target." The "another device" is only required to be a device used in the communication service, and may be, for example, the server 10, another computer other than the server 10, a component such as a CPU, a memory, or a network card included in the server 10 and the another computer, a battery, an antenna, a communication cable, or a sensor.

In this embodiment, the state data acquisition module 101 acquires the state data when the anomaly has been detected. The state data acquired when the anomaly has been detected indicates the state in the whole or part of a period from the occurrence of the anomaly to resolution thereof. This period is hereinafter referred to as "anomaly period." The state data may indicate the state in not only the whole or part of the anomaly period but also another period other than the anomaly period. The state data acquisition module 101 may acquire the state data in a period from the occurrence of the anomaly to the resolution thereof, or may acquire the state data ex post facto after the resolution of the anomaly.

In this embodiment, the state at a certain pinpoint timing is not indicated in the state data. The state in a period having a certain length is indicated in the state data. For example, the state data acquisition module 101 acquires the state data relating to the time-series change in the state of the device in a period set by the period setting module 102. In this embodiment, three periods, that is, a saturation period, a reference period, and the anomaly period, are set by the period setting module 102 to be described later. Thus, the state data acquisition module 101 acquires the state data indicating the state of the communication device 20 in each of the saturation period, the reference period, and the anomaly period.

The state data acquisition module 101 may acquire the state data indicating the state of the communication device 20 in another period other than the saturation period, the reference period, and the anomaly period. For example, the state data acquisition module 101 may acquire the state data indicating the state of the communication device 20 in a period before the saturation period. The state data acquisition module 101 may acquire the state data indicating the state of the communication device 20 in a period after the reference period and the anomaly period. The state data acquisition module 101 may acquire the state data indicating the state of the communication device 20 independently of an anomaly occurrence timing at which the anomaly has occurred. The state data acquisition module 101 can acquire the state data stored in the state database DB at any timing.

### [Period Setting Module]

The period setting module 102 sets a period relating to the state data. The phrase "period relating to the state data" refers to a period used in a determination executed by the relation determination module 105 to be described later. The whole period during which the state is indicated by the state data may be used in the determination executed by the relation determination module 105 to be described later, but in this embodiment, it is assumed that only a partial period during which the state is indicated by the state data is used in the determination executed by the relation determination module 105 to be described later. The phrase "setting a period" means deciding a start time point and an end time point of the period.

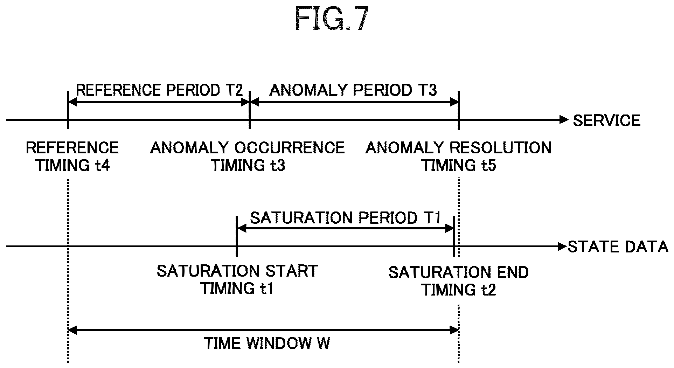

FIG. 7 is a time chart for showing an example of the periods set by the period setting module 102. In this embodiment, a case in which the period setting module 102 sets three periods, that is, a saturation period T1, a reference period T2, and an anomaly period T3, is exemplified. A time window W in FIG. 7 is a period used in processing executed by the relation determination module 105 and the like, in the state data. In the example of FIG. 7, a period obtained by combining the reference period T2 and the anomaly period T3 corresponds to the time window W.

For example, the period setting module 102 may set any one or two of the saturation period T1, the reference period T2, and the anomaly period T3. That is, the period setting module 102 may set only the saturation period T1, only the reference period T2, only the anomaly period T3, only the saturation period T1 and the reference period T2, only the saturation period T1 and the anomaly period T3, or only the reference period T2 and the anomaly period T3. The period setting module 102 may set only the time window W without setting the saturation period T1, the reference period T2, and the anomaly period T3.

For example, the period setting module 102 sets the saturation period T1 relating to the state data based on the determination result obtained by the saturation determination module 104. In the example of FIG. 7, the period setting module 102 sets, as the saturation period T1, a period from a saturation start timing t1 at which saturation of the state indicated by the state data has started to a saturation end timing t2 at which the saturation of the state indicated by the state data has ended. The saturation start timing t1 is a date and time on which the saturation determination module 104 has determined that the saturation has started out of dates and times on which the state has been indicated by the state data. The saturation end timing t2 is a date and time on which the saturation determination module 104 has determined that the saturation has ended out of the dates and times on which the state has been indicated by the state data. The period setting module 102 may set, as the saturation period T1, a period from the saturation start timing t1 to a current timing at which the saturation has not ended (saturation is continuing). For example, the period setting module 102 may set a period from the saturation start timing t1 to a time point specified by the administrator as the saturation period T1.

For example, when the anomaly has been detected, the period setting module 102 sets the reference period T2 and the anomaly period T3 relating to the state data based on an anomaly occurrence timing t3 at which the anomaly has occurred. In this embodiment, when the anomaly has been detected, the administrator executes anomaly occurrence operation indicating the occurrence of the anomaly from the administrator terminal 40. For example, the administrator executes the anomaly occurrence operation when receiving an inquiry indicating the occurrence of the anomaly from a user.

For example, the server 10 determines whether or not the anomaly has occurred by determining whether or not anomaly occurrence data indicating the anomaly occurrence operation has been received from the administrator terminal 40. The server 10 does not determine that the anomaly has occurred, when not receiving the anomaly occurrence data from the administrator terminal 40. The server 10 determines that the anomaly has occurred, when receiving the anomaly occurrence data from the administrator terminal 40. A timing of the reception of the anomaly occurrence data by the server 10 is the anomaly occurrence timing t3.

The administrator may execute the anomaly occurrence operation based on not the inquiry from the user but another determination factor. For example, the administrator may execute the anomaly occurrence operation through visually checking the state data of the communication device 20 in the administrator screen SC or another screen. In a case in which an execution result of a program for estimating the occurrence of the anomaly is displayed in the administrator screen SC or another screen, the administrator may execute the anomaly occurrence operation through visually checking this execution result.

A method itself for the server 10 to detect the occurrence of the anomaly may be any method, and is not limited to the anomaly occurrence operation executed by the administrator. For example, the server 10 may detect the occurrence of the anomaly based on an execution result of an anomaly detection program for detecting the occurrence of the anomaly. The anomaly detection program determines whether or not the anomaly has occurred based on the state data. For example, the anomaly detection program determines that the anomaly has occurred when the state indicated by the state data has exceeded a reference range.

For example, the anomaly detection program may determine that the anomaly has occurred when a state in which the state indicated by the state data exceeds the reference range has continued for a predetermined time or longer. The anomaly detection program may determine that the anomaly has occurred when the number of times or a frequency of exceedance over the reference range by the state indicated by the state data has become a threshold value or more. In this case, the timing at which the anomaly detection program has determined that the anomaly has occurred is the anomaly occurrence timing t3.

In the example of FIG. 7, the period setting module 102 sets, as the reference period T2, a period from a reference timing t4 being a basis of the reference period T2 to the anomaly occurrence timing t3 at which the anomaly has occurred. For example, the reference timing t4 is a timing earlier than the anomaly occurrence timing t3 by a predetermined time. The reference timing t4 may be a timing earlier than the current time point by a predetermined time, or a timing specified by the administrator.

For example, the period setting module 102 sets, as the anomaly period T3, a period from the anomaly occurrence timing t3 to an anomaly resolution timing t5 at which the anomaly has been resolved. The anomaly resolution timing t5 is a timing at which the anomaly has been determined to be resolved. In this embodiment, when the anomaly has been resolved, the administrator executes anomaly resolution operation indicating the resolution of the anomaly from the administrator terminal 40. For example, the administrator executes the anomaly resolution operation when no longer receiving the inquiry indicating the occurrence of the anomaly from the user.

For example, the server 10 determines whether or not the anomaly has been resolved by determining whether or not anomaly resolution data indicating the anomaly resolution operation has been received from the administrator terminal 40. The server 10 does not determine that the anomaly has been resolved, when not receiving the anomaly resolution data from the administrator terminal 40. The server 10 determines that the anomaly has been resolved, when receiving the anomaly resolution data from the administrator terminal 40. A timing of the reception of the anomaly resolution data by the server 10 is the anomaly resolution timing t5.

The administrator may execute the anomaly resolution operation based on not the inquiry from the user but another determination factor. For example, the administrator may execute the anomaly resolution operation through visually checking the state data of the communication device 20 in the administrator screen SC or another screen. In a case in which an execution result of a program for estimating the resolution of the anomaly is displayed in the administrator screen SC or another screen, the administrator may execute the anomaly resolution operation through visually checking this execution result.

A method itself for the server 10 to detect the resolution of the anomaly may be any method, and is not limited to the anomaly resolution operation executed by the administrator. For example, the server 10 may detect the resolution of the anomaly based on an execution result of an anomaly resolution program for detecting the resolution of the anomaly. The anomaly resolution program determines whether or not the anomaly has been resolved based on the state data. For example, the anomaly resolution program determines that the anomaly has been resolved, when the state indicated by the state data has fallen within a reference range.

For example, the anomaly resolution program may determine that the anomaly has been resolved, when a state in which the state indicated by the state data falls within the reference range has continued for a predetermined time or longer. The anomaly resolution program may determine that the anomaly has been resolved, when the number of times or a frequency of falling of the state indicated by the state data within the reference range has become a threshold value or more. In this case, the timing at which the anomaly resolution program has determined that the anomaly has been resolved is the anomaly resolution timing t5.

### [Normalization Execution Module]

The normalization execution module 103 executes normalization relating to the state data. For example, the normalization execution module 103 executes the normalization based on the state data of each of the plurality of communication devices 20. The normalization execution module 103 executes the normalization such that a numerical value of the state indicated by the state data of each of the plurality of communication devices 20 falls within a certain range. The normalization execution module 103 is only required to execute the normalization based on a publicly-known normalization method. For example, the normalization method may be a z-score normalization method or a min-max normalization method.

### [Saturation Determination Module]

The saturation determination module 104 determines whether or not the time-series state of the communication device 20 is saturated based on the state data. The saturation means that a change amount of the state indicated by the state data becomes smaller than a threshold value, or that a state in which this change amount is smaller than this threshold value continues for a predetermined time or longer. In a case in which an upper limit value does not exist in principle as in the communication amount, the change amount mainly means an increase amount when the communication amount increases. Thus, the following situation corresponds to the saturation: the increase amount of the state indicated by the state data becomes smaller than a threshold value after the sum of the change amount increases in a certain period; or a state in which this increase amount is smaller than this threshold value continues for a predetermined time or longer. The change amount may be an integrated value in a period with a certain length, or a change amount between a certain time point and the next time point. The change amount may mean a decrease amount of the communication amount. That is, the saturation determination module 104 determines the saturation based on a time-series change in the change amount itself indicated by the state data.

For example, the saturation determination module 104 determines that the time-series state of the communication device 20 is saturated when a transition is made from a state in which the increase amount of the state indicated by the state data is equal to or larger than the threshold value to a state in which this increase amount is smaller than the threshold value, or to a state in which the state in which this increase amount is smaller than the threshold value has continued for the predetermined time or longer. Even when the state in which the increase amount of the state indicated by the state data is smaller than the threshold value or the state in which the state in which this increase amount is smaller than the threshold value has continued for the predetermined time or longer is made, in a state in which this increase amount is smaller than the threshold value before that, the saturation determination module 104 determines that the time-series state of the communication device 20 is not saturated. For example, the saturation determination module 104 may determine that the time-series state of the communication device 20 is saturated when the state indicated by the state data is equal to or more than a threshold value and the state in which the increase amount of this state is smaller than the threshold value or the state in which the state in which this increase amount is smaller than the threshold value has continued for the predetermined time or longer is made. Even when the state in which the increase amount of the state indicated by the state data is smaller than the threshold value or the state in which the state in which this increase amount is smaller than the threshold value has continued for the predetermined time or longer is made, as long as this state is less than the threshold value, the saturation determination module 104 determines that the time-series state of the communication device 20 is not saturated.

For example, the saturation determination module 104 determines whether or not the time-series state of the communication device 20 is saturated based on the state data of each of the plurality of communication devices 20 and a threshold value defined in advance. In other words, for each piece of the state data of the communication device 20, the saturation determination module 104 determines whether or not the time-series state indicated by this state data is saturated based on the threshold value defined in advance. The threshold value referred to when the saturation determination module 104 determines the saturation may be specified by the administrator, or may be calculated from a tendency of the anomaly in the past. The threshold value may be decided based on a model using a method of machine learning.

The saturation determination module 104 may determine whether or not the state of the communication device 20 is saturated based on the model using the method of machine learning without using the threshold value. In this case, the model has learned training data in which a time-series change in a state indicated by state data for training is treated as an input and a label indicating whether or not this state is saturated is treated as an output. The saturation determination module 104 may input the state data of a determination target to the trained model, and determine whether or not the state of the communication device 20 is saturated based on the label output from the model.

For example, the saturation determination module 104 determines whether or not the time-series state of a certain communication device 20 is saturated by determining whether or not the change amount indicated by the state data of this communication device 20 is equal to or larger than a threshold value. The saturation determination module 104 does not determine that the time-series state of the certain communication device 20 is saturated when determining that the change amount indicated by the state data of this communication device 20 is equal to or larger than the threshold value. The saturation determination module 104 determines that the time-series state of the certain communication device 20 is saturated when determining that the change amount indicated by the state data of this communication device 20 is smaller than the threshold value.

For example, the saturation determination module 104 determines whether or not the time-series state of the certain communication device 20 is saturated by determining whether or not a state in which the change amount indicated by the state data of this communication device 20 is smaller than the threshold value has continued for a predetermined time or longer. The saturation determination module 104 does not determine that the time-series state of the certain communication device 20 is saturated when determining that the state in which the change amount indicated by the state data of this communication device 20 is smaller than the threshold value has not continued for the predetermined time or longer. The saturation determination module 104 determines that the time-series state of the certain communication device 20 is saturated when determining that the state in which the change amount indicated by the state data of this communication device 20 is smaller than the threshold value has continued for the predetermined time or longer.

In this embodiment, the saturation determination module 104 determines whether or not the state of the communication device 20 is saturated based on the state data of this communication device 20 when the anomaly has been detected. That is, the saturation determination module 104 determines whether or not the state of the communication device 20 is saturated based on the state data of this communication device 20 after the anomaly has occurred. For example, the saturation determination module 104 determines whether or not the state of the communication device 20 is saturated based on the state data for which the normalization has been executed. The saturation determination module 104 determines whether or not the state of the communication device 20 is saturated based on the state indicated by the state data for which the normalization has been executed.

In this embodiment, description is given of a case in which the saturation determination module 104 determines whether or not the state is saturated based on the state in the time window W in the state indicated by the state data. The saturation determination module 104 may determine whether or not the state indicated by the state data is saturated independently of the time window W. For example, the saturation determination module 104 may determine whether or not the state is saturated based on the state in the reference period T2 in the state indicated by the state data. The saturation determination module 104 may determine whether or not the state is saturated based on the state in the anomaly period T3 in the state indicated by the state data. The saturation determination module 104 may determine whether or not the state is saturated based on the state in the whole period indicated by the state data.

### [Relation Determination Module]

The relation determination module 105 determines whether or not the state data is related to the anomaly in the communication service based on a determination result obtained by the saturation determination module 104. The phrase "the state data is related to the anomaly" means that a correlation exists between the anomaly and the state data. In a case in which the state indicated by the state data is saturated when the anomaly occurs, the anomaly is related to the state data. The state indicated by the state data is not required to be surely saturated when the anomaly is detected. It is only required that a certain level of correlation exist between the anomaly and the state data. For example, the state data is related to the anomaly in a case in which, when the anomaly has occurred "n" ("n" is a natural number) times, the number of times of saturation of the state indicated by the state data is equal to or larger than "k" ("k" is a natural number equal to or smaller than "n"). It is assumed that "k" is equal to or larger than a predetermined percentage (for example, 70%) of "n".

In this embodiment, the relation determination module 105 determines whether or not the state data is related to the anomaly when the anomaly has been detected. That is, the relation determination module 105 determines whether or not the state data is related to the anomaly after the anomaly has occurred. The relation determination module 105 may determine whether or not the state data is related to the anomaly before the anomaly is resolved (that is, during the anomaly period T3), but in this embodiment, a case in which the relation determination module 105 determines whether or not the state data is related to the anomaly after the anomaly is resolved is exemplified.

For example, the relation determination module 105 determines whether or not the state data is related to the anomaly based on the saturation period T1 in which the state has been determined to be saturated in a period in which a change has been shown in the state data. The phrase "period in which a change has been shown in the state data" means a period of a timestamp included in the state data. The saturation period T1 is a period in which the state of the communication device 20 has been determined to be saturated by the saturation determination module 104. That is, the saturation period T1 is a period in which the change amount of the state indicated by the state data is smaller than the threshold value, or a period in which the state in which the change amount of the state indicated by the state data is smaller than the threshold value has continued.

For example, the relation determination module 105 may determine whether or not the state data is related to the anomaly based on a degree of coincidence between the anomaly period T3 in which the anomaly has occurred and the saturation period T1 in which the state has been determined to be saturated in the period in which the change has been shown in the state data. The term "degree of coincidence" as used herein refers to a length or a percentage of an overlapping period in which the saturation period T1 and the anomaly period T3 overlap each other. When the saturation period T1 and the anomaly period T3 coincide with each other at a higher degree, the overlapping period becomes longer or the percentage of the overlapping period becomes higher. For example, the relation determination module 105 calculates the overlapping period in which the saturation period T1 and the anomaly period T3 overlap each other, and determines whether or not the state data is related to the anomaly based on this overlapping period.

For example, the relation determination module 105 does not determine that the state data is related to the anomaly when the length of the overlapping period is shorter than a threshold value, and determines that the state data is related to the anomaly when the length of the overlapping period is equal to or longer than the threshold value. The threshold value may be defined in advance, or may be defined based on the length of at least one of the saturation period T1 or the anomaly period T3. For example, the relation determination module 105 may determine that the state data is not related to the anomaly when the overlapping period is shorter than a predetermined percentage (for example, 80%) of at least one of the saturation period T1 or the anomaly period T3, and may determine that the state data is related to the anomaly when the overlapping period is equal to or longer than this predetermined percentage.

A method for the relation determination module 105 to determine whether or not the state data is related to the anomaly based on the saturation period T1 is not limited to a method based on the overlapping period. For example, the relation determination module 105 may determine whether or not the state data is related to the anomaly by determining whether or not the saturation period T1 includes the anomaly occurrence timing t3. In this case, the relation determination module 105 may determine that the state data is not related to the anomaly when the saturation period T1 does not include the anomaly occurrence timing t3, and may determine that the state data is related to the anomaly when the saturation period T1 includes the anomaly occurrence timing t3.

As another example, the relation determination module 105 may determine whether or not the state data is related to the anomaly by determining whether or not the length of the saturation period T1 is equal to or longer than a threshold value. The relation determination module 105 may determine that the state data is not related to the anomaly when the length of the saturation period T1 is shorter than the threshold value, and may determine that the state data is related to the anomaly when the length of the saturation period T1 is equal to or longer than the threshold value.

For example, the relation determination module 105 may determine whether or not the state data is related to the anomaly based on a highest value of the state in another period before the anomaly period T3 in which the anomaly has occurred in the period in which the change has been shown in the state data. The "another period" is only required to be a period before the anomaly period T3. In this embodiment, a case in which the reference period T2 corresponds to the "another period" is exemplified. The "another period" may be a period immediately before the anomaly period T3, or a period that is not immediately before the anomaly period T3 but earlier than the anomaly period T3 to some extent. The "another period" may be a period before the reference period T2. The anomaly period T3 may include a timing somewhat separate from the anomaly occurrence timing t3. The highest value is a maximum value of the communication amount in a certain period.

For example, the relation determination module 105 may determine whether or not the state data is related to the anomaly based on the highest value of the state in the another period (in this embodiment, the reference period T2) and a highest value of the state in a period before the another period. The period before the another period is a period before the reference period T2. For example, the period before the another period may be the whole period before the reference period T2, or a partial period before the reference period T2. The highest value is a value being a peak of the time-series change. The relation determination module 105 refers to the state database DB to acquire the highest value in the another period and the highest value of the state in the period before the another period.

For example, the relation determination module 105 determines whether or not the highest value of the state in the another period (in this embodiment, the reference period T2) is smaller than the highest value of the state in the period before the another period. The relation determination module 105 determines that the state data is not related to the anomaly when the highest value of the state in the another period (in this embodiment, the reference period T2) is equal to or larger than the highest value of the state in the period before the another period. The relation determination module 105 determines that the state data is related to the anomaly when the highest value of the state in the another period (in this embodiment, the reference period T2) is smaller than the highest value of the state in the period before the another period.

For example, the relation determination module 105 may determine whether or not the state data is related to the anomaly based on a highest value of the state indicated by the state data in the anomaly period T3 in which the anomaly has occurred in the period in which the change has been shown in the state data. The relation determination module 105 acquires the highest value of the state indicated by the state data in the anomaly period T3. The relation determination module 105 does not determine that the state data is related to the anomaly when the highest value is determined to be smaller than a threshold value, and determines that the state data is related to the anomaly when the highest value is determined to be equal to or larger than the threshold value.

For example, the relation determination module 105 may determine whether or not the state data is related to the anomaly based on a change amount of the state in each of the saturation period T1 in which the state is saturated and another period before the anomaly period T3 in which the anomaly has occurred in the period in which the change has been shown in the state data. As described above, the reference period T2 is an example of "another period." The relation determination module 105 determines whether or not a difference between the change amount of the state in the saturation period T1 and the change amount of the state in the another period is equal to or larger than a threshold value. The relation determination module 105 does not determine that the state data is related to the anomaly when this difference is determined to be smaller than the threshold value, and determines that the state data is related to the anomaly when this difference is determined to be equal to or larger than the threshold value.

The relation determination module 105 may determine whether or not the state data is related to the anomaly based on another determination method other than the above-mentioned determination method. For example, in a case in which the state indicated by the state data is saturated in the anomaly period T3 and this state is saturated also in a period in which the anomaly has not occurred, this state data is the state data in which the saturation steadily occurs, and hence the relation determination module 105 may determine that the state data is not related to the anomaly. On the other hand, in a case in which the state indicated by the state data is not saturated in the period in which the anomaly has not occurred but the state indicated by the state data is saturated in the anomaly period T3, the saturation occurs only in the anomaly period T3, and hence the relation determination module 105 may determine that the state data is not related to the anomaly.

### [Recovery Processing Execution Module]

The recovery processing execution module 106 executes, when the anomaly has been detected, recovery processing relating to recovery from the anomaly based on the state data determined to be related to the anomaly. The recovery processing is only required to be certain processing related to the anomaly that has occurred. In this embodiment, processing of displaying the state data related to the anomaly in the administrator screen SC corresponds to the recovery processing. The recovery processing may be another kind of processing, and may be, for example, processing of executing a program for recovery prepared in advance or processing of transmitting a notification such as an e-mail to the administrator.

For example, when the anomaly has been detected, the recovery processing execution module 106 transmits display data of the administrator screen SC to the administrator terminal 40, to thereby display the administrator screen SC on the administrator terminal 40. The recovery processing execution module 106 causes the administrator screen SC to display an image showing the state data related to the anomaly when the anomaly has been detected. In the example of FIG. 4, when a certain anomaly has occurred, the recovery processing execution module 106 causes the administrator screen SC to display the state indicated by the state data determined by the relation determination module 105 when the same anomaly occurred in the past. In a case in which a certain anomaly has occurred and the state data related to this anomaly has been identified, when the same anomaly occurs, the recovery processing execution module 106 executes the recovery processing based on the state data related to this anomaly.

### [1-3-2. Functions Implemented in Administrator Terminal]

For example, the administrator terminal 40 includes a data storage unit 400, an operation reception module 401, and a display control module 402. The data storage unit 400 is implemented mainly by the storage unit 42. The operation reception module 401 and the display control module 402 are implemented mainly by the control unit 41.

### [Data Storage Unit]

The data storage unit 400 stores data required for a task of the administrator. For example, the data storage unit 400 stores data required to display the administrator screen SC. The data storage unit 400 may store a maintenance tool required for the task of the administrator. The maintenance tool itself may be a publicly-known tool, and, for example, is only required to be a tool capable of monitoring a state of at least one of the hardware or the software.

### [Operation Reception Module]

The operation reception module 401 receives various operations from the administrator. For example, the operation reception module 401 receives the operation on the administrator screen SC.

### [Display Control Module]

The display control module 402 displays various screens on the display unit 45. For example, the display control module 402 displays the administrator screen SC on the display unit 45.

### [1-4. Processing Executed in Monitoring System]

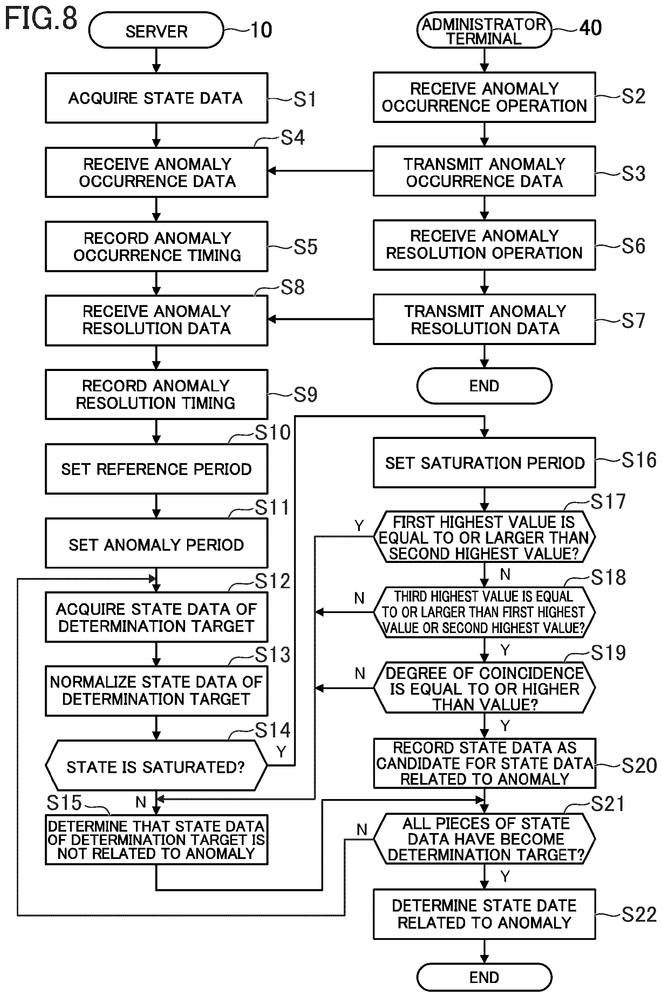

FIG. 8 is a flowchart for illustrating an example of processing executed in the monitoring system 1. The processing of FIG. 8 is executed by the control units 11 and 41 executing programs stored in the storage units 12 and 42, respectively.

As illustrated in FIG. 8, the server 10 communicates with each of the plurality of communication devices 20 to acquire the state data and store the state data in the state database DB (Step S1). When the anomaly has occurred, the administrator terminal 40 receives the anomaly occurrence operation executed by the administrator (Step S2). The administrator terminal 40 transmits the anomaly occurrence data indicating that the anomaly occurrence operation has been executed to the server 10 (Step S3). The server 10 receives the anomaly occurrence data from the administrator terminal 40 (Step S4). The server 10 records, in the storage unit 12, a timing of the reception of the anomaly occurrence data as the anomaly occurrence timing t3 at which the anomaly has occurred (Step S5). The administrator may specify the anomaly occurrence timing t3. In this case, the server 10 records the anomaly occurrence timing t3 specified by the administrator in the storage unit 12.

When the anomaly has been resolved, the administrator terminal 40 receives the anomaly resolution operation executed by the administrator (Step S6). The administrator terminal 40 transmits the anomaly resolution data indicating that the anomaly resolution operation has been executed to the server 10 (Step S7). The server 10 receives the anomaly resolution data from the administrator terminal 40 (Step S8). The server 10 records, in the storage unit 12, a timing of the reception of the anomaly resolution data as the anomaly resolution timing t5 at which the anomaly has been resolved (Step S9). The administrator may specify the anomaly resolution timing t5. In this case, the server 10 records the anomaly resolution timing t5 specified by the administrator in the storage unit 12.

The server 10 sets, as the reference period T2, a period from the reference timing t4 earlier than the anomaly occurrence timing t3 by a predetermined time to the anomaly occurrence timing t3 (Step S10). The server 10 sets a period from the anomaly occurrence timing t3 to the anomaly resolution timing t5 as the anomaly period T3 (Step S11). The server 10 refers to the state database DB to acquire the state data in a period including the anomaly occurrence timing t3 as the state data of a determination target (Step S12). The state data of the determination target is the state data being a target of processing of Step S13 and subsequent steps. Subsequent processing is executed for each piece of state data.

The server 10 normalizes the state data of the determination target (Step S13). In Step S13, the server 10 may execute preprocessing such as standardization processing or smoothing processing for the state data of the determination target, besides the normalization. As another example, the server 10 may be allowed not to execute processing of Step S14 and subsequent steps when the state indicated by the state data of the determination target is less than a predetermined threshold value.

The server 10 determines whether or not the state indicated by the state data of the determination target for which the normalization has been executed is saturated (Step S14). In Step S14, the server 10 calculates a time-series change amount of the state indicated by the state data. The server 10 determines that the state indicated by the state data is saturated when a state in which the time-series change amount is smaller than a threshold value continues. The server 10 determines that the state indicated by the state data is not saturated when the time-series change amount is equal to or larger than the threshold value or when the state in which the time-series change amount is smaller than the threshold value does not continue.

When the state indicated by the state data of the determination target is not determined to be saturated in Step S14 (N in Step S14), the server 10 determines that the state data of the determination target is not related to the anomaly (Step S15), and advances the processing to Step S21. When the state indicated by the state data of the determination target is determined to be saturated in Step S14 (Y in Step S14), the server 10 sets a period from the saturation start timing t1 to the saturation end timing t2 as the saturation period T1 (Step S16).

The server 10 determines whether or not a first highest value that is a highest value of the state data of the determination target in the reference period T2 is equal to or larger than a second highest value that is a highest value of this state data in a period earlier than the reference period T2 (Step S17). When the first highest value is determined to be equal to or larger than the second highest value in Step S17 (Y in Step S17), the server 10 advances the processing to Step S15 to determine that the state data of the determination target is not related to the anomaly.

When the first highest value is determined to be smaller than the second highest value in Step S17 (N in Step S17), the server 10 determines whether or not a third highest value of the state data of the determination target in the anomaly period T3 is equal to or larger than the first highest value or the second highest value (Step S18). Description is given here of a case in which the server 10 compares the third highest value with the first highest value or the second highest value (that is, a case in which only one of the first highest value or the second highest value becomes a comparison target), but the server 10 may compare the third highest value with the first highest value and the second highest value.

When the highest value in the anomaly period T3 is determined to be smaller than the first highest value or the second highest value in Step S18 (N in Step S18), the server 10 advances the processing to Step S15 to determine that the state data of the determination target is not related to the anomaly. When the third highest value being the highest value in the anomaly period T3 is determined to be equal to or larger than the first highest value or the second highest value in Step S18 (Y in Step S18), the server 10 determines whether or not the degree of coincidence between the saturation period T1 and the anomaly period T3 is equal to or higher than a threshold value (Step S19). When the degree of coincidence between the saturation period T1 and the anomaly period T3 is determined to be lower than the threshold value in Step S19 (N in Step S19), the server 10 advances the processing to Step S15 to determine that the state data of the determination target is not related to the anomaly.

When the degree of coincidence between the saturation period T1 and the anomaly period T3 is determined to be equal to or higher than the threshold value in Step S19 (Y in Step S19), the server 10 records, in the storage unit 12, the state data of the determination target as a candidate for the state data related to the anomaly (Step S20). The server 10 determines whether or not all pieces of state data have become the determination target (Step S21). When the state data that has not yet become the determination target exists in Step S21 (N in Step S21), the server 10 returns the processing to Step S12, and processing for the state data of the next determination target is executed.

When all pieces of state data are determined to have been determined in Step S21 (Y in Step S21), the server 10 determines, as the state data related to the anomaly, the state data from among the pieces of state data recorded as the candidates in Step S20 (Step S22), and this processing is ended. In Step S22, the server 10 calculates a feature amount indicating a degree of relation between the state data and the anomaly based on the change amount or the like in the saturation period T1 and the reference period T2 in each of the pieces of state data recorded as the candidates in Step S20, and determines a predetermined number of pieces of state data in decreasing order of this feature amount as the state data related to the anomaly. The pieces of state data recorded as the candidates in Step S20 may be directly determined as the state data related to the anomaly without execution of the processing of Step S22.

### [1-5. Summary of Embodiment]

The monitoring system 1 of this embodiment determines whether or not the state of the communication device 20 is saturated based on the state data relating to the time-series change in the state of the communication device 20. The monitoring system 1 determines whether or not the state data is related to the anomaly in the communication service based on the determination result. With this configuration, the monitoring system 1 can determine whether or not the state data is related to the anomaly in the communication service. As a result, for example, the monitoring system 1 can hasten recovery from the anomaly. As another example, it also becomes possible for the monitoring system 1 to quickly detect the anomaly and analyze a factor in the anomaly.

Moreover, when the anomaly has been detected, the monitoring system 1 executes acquisition of the state data, determination of whether or not the state of the communication device 20 is saturated, and determination of whether or not the state data is related to the anomaly. The monitoring system 1 executes the recovery processing based on the state data determined to be related to the anomaly when the anomaly has been detected. With this configuration, the monitoring system 1 can hasten the recovery in the case in which the anomaly has been detected.

Further, when the anomaly has been detected, the monitoring system 1 sets a period relating to the state data based on the anomaly occurrence timing t3 at which the anomaly has occurred, and the monitoring system 1 acquires the state data relating to the time-series change in the state of the communication device 20 in the period. With this configuration, the monitoring system 1 can determine whether or not the state data is related to the anomaly based on the state data in the period related to the anomaly, and hence a determination accuracy is increased. The monitoring system 1 can hasten the recovery from the anomaly by accurately identifying the state data related to the anomaly.

Moreover, the monitoring system 1 determines whether or not the state is saturated based on the state data for which the normalization has been executed. With this configuration, even when a range of a change in the communication amount varies for each communication device 20, the monitoring system 1 can absorb the range by the normalization. Thus, the accuracy of the determination of whether or not the state data is related to the anomaly can be increased.

Further, the monitoring system 1 determines whether or not the state data is related to the anomaly based on the saturation period T1 in which the state has been determined to be saturated in the period in which a change has been shown in the state data. With this configuration, the monitoring system 1 can determine whether or not the state data is related to the anomaly through use of a period with a high possibility of being directly linked to the anomaly, such as the saturation period T1. Thus, the accuracy of the determination of whether or not the state data is related to the anomaly can be increased.

Moreover, the monitoring system 1 determines whether or not the state data is related to the anomaly based on the highest value of the state in another period before the anomaly period T3 in which the anomaly has occurred in the period in which the change has been shown in the state data. With this configuration, the monitoring system 1 can determine whether or not the state data is related to the anomaly, for example, taking into consideration whether or not the communication amount steadily becomes high from a time when the anomaly has not occurred. Thus, the accuracy of the determination of whether or not the state data is related to the anomaly can be increased.

Further, the monitoring system 1 determines whether or not the state data is related to the anomaly based on the highest value of the state in the another period before the anomaly period T3 and the highest value of the state in the period before the another period. With this configuration, the monitoring system 1 can determine whether or not the state data is related to the anomaly, for example, taking into consideration whether or not the communication amount steadily becomes high from the time when the anomaly has not occurred. Thus, the accuracy of the determination of whether or not the state data is related to the anomaly can be increased.

Moreover, the monitoring system 1 determines whether or not the state data is related to the anomaly based on the highest value of the state indicated by the state data in the anomaly period T3 in which the anomaly has occurred in the period in which the change has been shown in the state data. Even when the state indicated by the state data is saturated, there is a possibility that this state is not related to the anomaly when a value of the saturation is not a very high value. Thus, the monitoring system 1 can increase the accuracy of the determination of whether or not the state data is related to the anomaly by determining whether or not the state data is related to the anomaly in consideration of the highest value of the state indicated by the state data in the anomaly period T3.

Further, the monitoring system 1 determines whether or not the state data is related to the anomaly based on the degree of coincidence between the anomaly period T3 in which the anomaly has occurred and the saturation period T1 in which the state has been determined to be saturated in the period in which the change has been shown in the state data. It is considered that a degree at which the state data is related to the anomaly is higher when the degree of coincidence between the saturation period T1 and the anomaly period T3 is higher. Thus, the monitoring system 1 can increase the accuracy of the determination of whether or not the state data is related to the anomaly by using the degree of coincidence.

Moreover, the monitoring system 1 determines whether or not the state data is related to the anomaly based on the change amount of the state in each of the saturation period T1 in which the state is saturated and another period before the anomaly period T3 in which the anomaly has occurred in the period in which the change has been shown in the state data. With this configuration, even when the state indicated by certain state data is saturated, the monitoring system 1 can determine whether or not the state data is related to the anomaly, taking into consideration whether this state is likely to be steadily saturated. Thus, the accuracy of the determination of whether or not the state data is related to the anomaly can be increased.

### [1-6. Modification Examples]

The present disclosure is not limited to the embodiment described above. The present disclosure may appropriately be modified without departing from the purport of the present disclosure.

### [1-6-1. Modification Example 1-1]

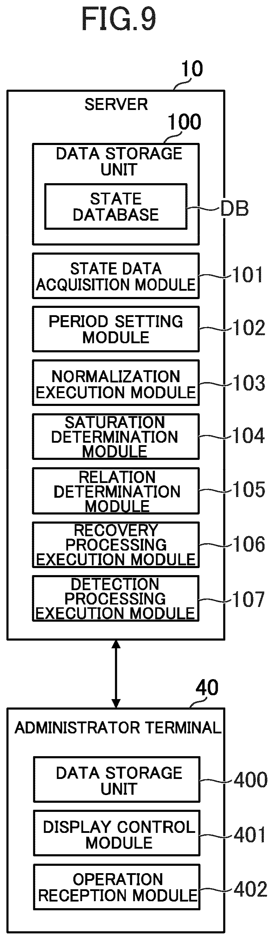

FIG. 9 is a diagram for illustrating an example of functions implemented in the monitoring system 1 of Modification Example 1-1. The monitoring system 1 of Modification Example 1-1 includes a detection processing execution module 107. The detection processing execution module 107 is implemented by the control unit 11. For example, in the embodiment, the case in which a series of processing is executed when the anomaly has been detected has been described, but the series of processing may be executed before the anomaly is detected. In Modification Example 1-1, description is given of a case in which the determination result obtained by the saturation determination module 104 is used for detection of the anomaly. In Modification Example 1-1, it is assumed that a period used in the series of processing (period corresponding to the time window W in FIG. 7) in the state data is a period from a time point earlier than the current time point by a predetermined period (for example, approximately 15 minutes) to the current time point.

The state data acquisition module 101 in Modification Example 1-1 acquires the state data before the anomaly is detected. A method for the state data acquisition module 101 to acquire the state data is the same as that in the embodiment. The state data acquisition module 101 acquires the state data in real time during operation of the communication service. The state data acquisition module 101 acquires the state data independently of whether or not the anomaly has occurred. The saturation determination module 104 in Modification Example 1-1 determines whether or not the state is saturated based on the state data before the anomaly is detected. A method for the saturation determination module 104 to determine the saturation is also the same as that in the embodiment. The saturation determination module 104 determines whether or not the state indicated by the state data is saturated independently of whether or not the anomaly has occurred.

The relation determination module 105 in Modification Example 1-1 determines whether or not the state data is related to the anomaly before the anomaly is detected. The relation determination module 105 determines whether or not the state indicated by the state data is related to the anomaly independently of whether or not the anomaly has occurred. For example, the relation determination module 105 determines that the state indicated by the state data is not related to the anomaly when this state is determined not to be saturated, and determines that the state indicated by the state data is related to the anomaly when this state is determined to be saturated.

The detection processing execution module 107 executes detection processing relating to detection of the anomaly based on the state data determined to be related to the anomaly. The detection processing is only required to be certain processing for detecting the anomaly that has occurred. In Modification Example 1-1, processing of displaying the occurrence of the anomaly in the administrator screen SC corresponds to the detection processing. For example, when the anomaly has been detected, the detection processing execution module 107 causes the administrator screen SC to display an image showing the detection of the anomaly. The detection processing execution module 107 may execute the detection processing by transmitting a notification to the administrator through use of a measure such as an e-mail.

Before the anomaly is detected, the monitoring system 1 of Modification Example 1-1 executes the acquisition of the state data, the determination of whether or not the state of the communication device 20 is saturated, and the determination of whether or not the state data is related to the anomaly. The monitoring system 1 executes the detection processing relating to the detection of the anomaly based on the state data determined to be related to the anomaly. With this configuration, the monitoring system 1 can quickly detect the anomaly.

### [1-6-2. Modification Example 1-2]

For example, the monitoring system 1 can be applied also to another service other than the communication service. For example, the monitoring system 1 may determine whether or not state data of a device in another service such as an electronic commerce service, a travel reservation service, a financial service, a payment service, an online flea market service, or a video distribution service is related to an anomaly in the another service.

For example, the monitoring system 1 may determine whether or not, to an anomaly in each of a plurality of services, the state data of the device in the service or another service is related. The term "monitoring system 1" can be read as "tenant" in a cloud infrastructure or a cloud platform. The monitoring system 1 is configured by a plurality of offering services selected from an offering service group including a software configuration or a hardware configuration.

The state data acquisition module 101 in Modification Example 1-2 acquires the state data of the device in each of the plurality of services. The processing of acquiring the state data of the device in the individual service by the state data acquisition module 101 may be the same as that in the embodiment. The state data acquisition module 101 communicates with the device of each of the plurality of services to acquire the state data of the device.

The saturation determination module 104 in Modification Example 1-2 determines whether or not the device in each of the plurality of services involves saturation based on the state data of the device. The processing of determining the saturation based on the state data of the device in the individual service by the saturation determination module 104 may be the same as that in the embodiment.

The relation determination module 105 in Modification Example 1-2 determines whether or not the state data is related to the anomaly in each of the plurality of services based on a determination result obtained by the saturation determination module 104. The processing of determining whether or not the state data is related to the anomaly in the individual service by the relation determination module 105 may be the same as that in the embodiment.

The monitoring system 1 of Modification Example 1-2 acquires the state data of the device in each of the plurality of services. The monitoring system 1 determines whether or not the device involves saturation based on the state data of the device in each of the plurality of services. The monitoring system 1 determines whether or not the state data is related to the anomaly in each of the plurality of services based on the determination result. With this configuration, the monitoring system 1 can respond to the anomaly in each of the plurality of services.

### [1-6-3. Other Modification Examples]

For example, the above-mentioned modification examples may be combined with one another.

For example, in the embodiment, the case in which the main processing is executed in the server 10 has been described, but the processing described as the processing executed in the server 10 may be executed in the administrator terminal 40 or another computer, or may be distributed to a plurality of computers.

### [2. Second Embodiment]

A second embodiment being an example of another embodiment of the monitoring system 1 according to the present disclosure is described. In the second embodiment, an example of processing relating to an anomaly in a service is described. Related arts can only specify a recovery procedure based on a state of a device defined in advance out of various devices in a system. Various devices are sometimes related to an anomaly that has occurred in the system. Even when pieces of state data of the plurality of devices are closely relevant to each other, related arts are incapable of identifying relevance between the pieces of state data of the plurality of devices. Thus, the monitoring system 1 of the second embodiment identifies relevance of state data relating to a state of a device being a monitoring target in a service.

### [2-1. Hardware Configuration of Monitoring System in Second Embodiment]

A hardware configuration of the monitoring system 1 of the second embodiment may be the same as that in the first embodiment.

### [2-2. Overview of Monitoring System]

In this embodiment, a case in which the communication device 20 is a server computer having a containerized network function (CNF) is exemplified. Further, a case in which the user terminal 30 is a smartphone is exemplified. The communication device 20 relays communication of a large number of user terminals 30. For example, when a communication amount to be processed by the communication device 20 reaches a communication amount that can be processed by this communication device 20, the anomaly possibly occurs in a communication service. The communication amount can be expressed by a publicly-known index such as bps.

For example, when the anomaly occurs in the communication service, the administrator identifies the communication device 20 related to the anomaly, and executes recovery work. However, in the communication service, not only certain one communication device 20 but a plurality of communication devices 20 are sometimes related to the anomaly. For example, when the anomaly in the communication service has occurred in a specific area, there is a possibility that, besides the communication device 20 identified as a factor in the anomaly by the administrator, another communication device 20 relevant to this communication device 20 is related to the anomaly. It is difficult for the administrator to identify all communication devices 20 related to the anomaly by itself.

For example, it is also conceivable to detect the anomaly when the communication amount processed by the communication device 20 becomes a threshold value or more. However, there is a case in which the communication device 20 can process a communication amount larger than an upper limit value defined by the administrator, and there is also a case in which the communication device 20 can process only a communication amount smaller than the upper limit value defined by the administrator. Moreover, there is also a case in which the administrator itself does not know the upper limit value of the communication device 20. Thus, in this embodiment, the upper limit value of the communication amount for determining the anomaly is not defined. Thus, even when the communication amount of the communication device 20 reaches a certain amount, this case does not always correspond to the anomaly.

In this embodiment, the server 10 identifies the communication amount of another communication device 20 having features similar to those of the communication amount of the communication device 20 related to the anomaly that has occurred in the communication service. For example, the communication device 20 related to the anomaly is identified through analysis executed by the administrator. As in a modification example to be described later, the communication device 20 related to the anomaly may be identified based on saturation of the communication amount. There is a possibility that the above-mentioned another communication device 20 is related to the anomaly, and hence identifying the above-mentioned another communication device 20 is useful for detection of the anomaly, recovery, and the like.

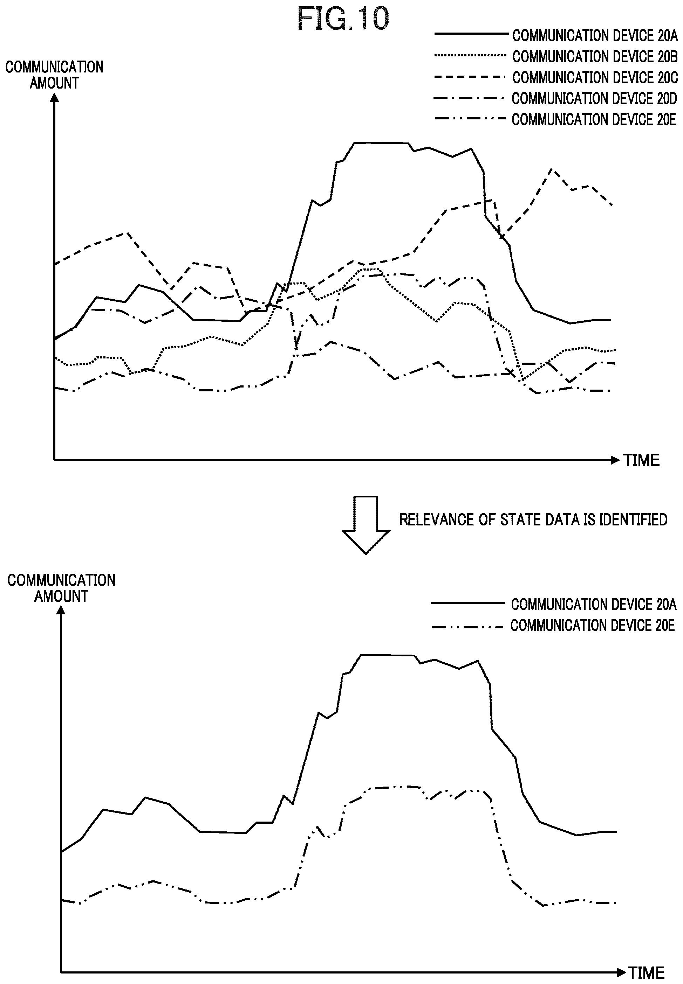

FIG. 10 includes graphs for showing an example of a time-series change in the communication amount of the communication devices 20 in a case in which the anomaly has been detected in the communication service. The horizontal axis in FIG. 10 is a time axis. The vertical axis in FIG. 10 is an axis indicating the communication amount. In the example of FIG. 10, a change in the communication amount of each of five communication devices 20A to 20E disposed in a facility of a telecommunications carrier is shown. The communication devices 20A to 20E are hereinafter referred to simply as "communication device 20" when being not discriminated from each other.

In the example of FIG. 10, the communication amount of the communication device 20A rapidly increases at a certain time point. Thereafter, the communication device 20A becomes incapable of processing a certain amount or more of communication, and the communication amount is saturated. In this case, the user terminal 30 that has attempted to connect to the communication device 20A in a certain area becomes incapable of using the communication service. That is, the anomaly occurs in the communication service in this area. The user sometimes contacts a call center of the communication service to convey that the communication service is unavailable.

For example, the administrator receives inquiries from a plurality of users to understand the occurrence of the anomaly. It is assumed that the administrator has not identified, at this time point, the communication device 20 being a factor in the anomaly and then the communication amount of the communication device 20A lowers and recovery from the anomaly is obtained by itself. Further, the administrator no longer receives the inquiry from the user, and understands that the recovery from the anomaly has been obtained by itself. When the recovery from the anomaly is obtained by itself, the user terminal 30 becomes capable of using the communication service through the communication device 20A.

For example, the administrator analyzes the communication amount of each of the communication devices 20A to 20E after the anomaly that has occurred in the certain area is resolved. The administrator identifies that the communication amount of the communication device 20A has rapidly increased and been saturated in the period in which this anomaly has occurred. The administrator inputs, to the administrator terminal 40, information indicating that the communication amount of the communication device 20A is related to the anomaly that has occurred in the above-mentioned area. The administrator terminal 40 uploads this information to the server 10. The server 10 associates the above-mentioned area with relevance of the communication amount of the communication device 20A to the anomaly in this area, and stores the associated information.

For example, the server 10 executes clustering of each of the communication devices 20A to 20E, to thereby determine whether or not the state data relevant to the state data of the communication device 20A exists among pieces of state data of the communication devices 20B to 20E. In the example of FIG. 10, similarity between features of the communication amount of the communication device 20A and features of the communication amount of the communication device 20E is identified by the clustering.

For example, the server 10 records, in the storage unit 12, relevance of not only the communication device 20A specified by the administrator but also the communication device 20E identified by the clustering to the anomaly in the certain area. When the anomaly occurs again in this area, the server 10 transmits, to the administrator terminal 40, a notification of prompting checking of the state of not only the communication device 20A but also the communication device 20E.

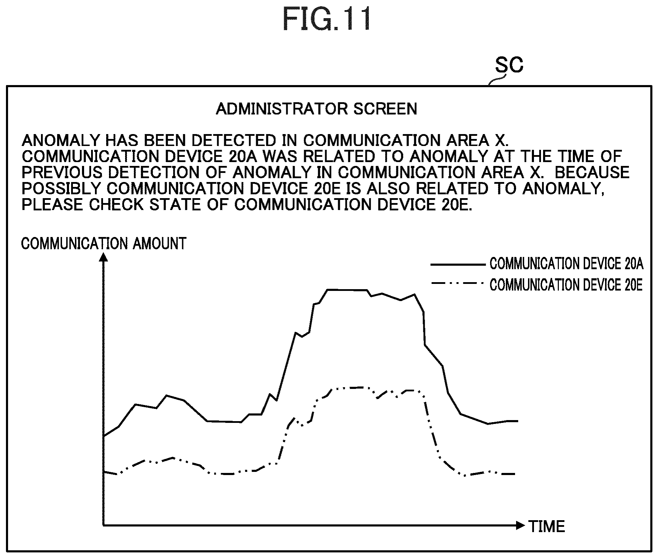

FIG. 11 is a view for illustrating an example of the notification displayed on the administrator terminal 40. For example, it is assumed that a call center of the communication service received an inquiry from a user who attempted to use the communication service from a certain area X when an anomaly was found in the communication amount of the communication device 20A in the past. When, at a current time point, the call center receives an inquiry from a user who has attempted to use the communication service in the same area X, occurrence of the anomaly in the communication service in the area X is detected. In this case, the server 10 transmits, to the administrator terminal 40, display data of the administrator screen SC prompting checking of the communication device 20A specified by the administrator and the communication device 20E identified by the clustering.

For example, when the administrator terminal 40 receives the display data of the administrator screen SC, a message prompting checking of the communication amount of the communication device 20A and the communication amount of the communication device 20E relevant to the communication amount of the communication device 20A is displayed. In the administrator screen SC, a graph showing a current communication amount of each of the communication devices 20A and 20E may be displayed, or a graph showing the communication amount of each of the communication devices 20A and 20E when a similar anomaly occurred in the past may be displayed. The administrator checks the administrator screen SC to perform maintenance of the communication devices 20A and 20E. The maintenance itself of each of the communication devices 20A and 20E may be executed through a publicly-known method.

As described above, when the anomaly has occurred in the communication service, the monitoring system 1 identifies the communication device 20E relevant to the communication device 20A related to the anomaly, by the clustering. For example, with the monitoring system 1, it becomes easier for the administrator to identify the communication device 20 being a factor in an anomaly when a similar anomaly occurs again, and hence the administrator can quickly execute recovery work. Details of the monitoring system 1 are now described.

### [2-3. Functions Implemented in Monitoring System]

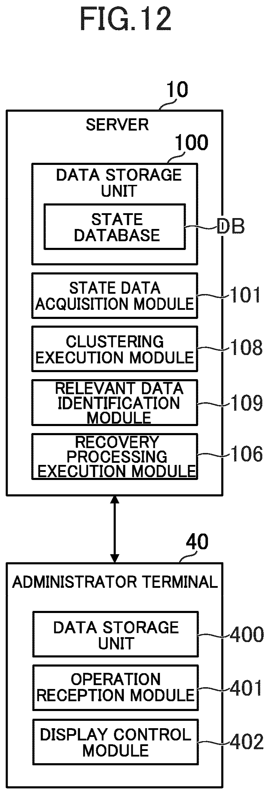

FIG. 12 is a diagram for illustrating an example of functions implemented in the monitoring system 1. In FIG. 12, functions implemented in the server 10 and functions implemented in the administrator terminal 40 are illustrated. Functions of each of the communication device 20 and the user terminal 30 are the same as functions in a publicly-known communication service, and are thus omitted in FIG. 12. For example, the communication device 20 has a function of transmitting state data to be described later or information on part of the state data to the server 10. The user terminal 30 has functions for a user to use the communication service.

### [2-3-1. Functions Implemented in Server]

For example, the server 10 includes the data storage unit 100, the state data acquisition module 101, a clustering execution module 108, a relevant data identification module 109, and the recovery processing execution module 106. The data storage unit 100 is implemented by the storage unit 12. The state data acquisition module 101, the clustering execution module 108, the relevant data identification module 109, and the recovery processing execution module 106 are implemented by the control unit 11.

### [Data Storage Unit]

The data storage unit 100 stores data relating to the communication service. For example, the data storage unit 100 stores the state database DB.

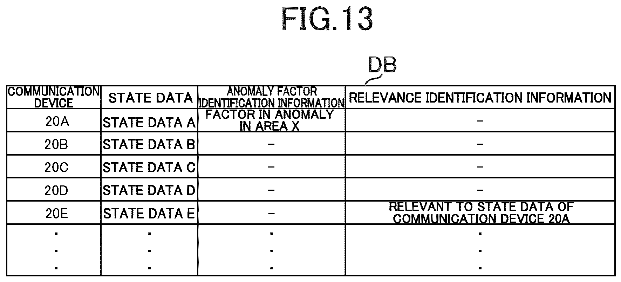

FIG. 13 is a table for showing an example of the state database DB. The state database DB is a database in which the state data of each of a plurality of communication devices 20 is stored. For example, the following pieces of information or data are stored in the state database DB: device identification information that allows identification of each of the plurality of communication devices 20; the state data indicating the state of the communication device 20; anomaly factor identification information that allows identification of whether or not the state data corresponds to anomaly factor data to be described later; and relevance identification information that allows identification of whether or not the state data corresponds to relevant data to be described later. Other kinds of data may be stored in the state database DB. For example, information indicating a place in which the communication device 20 is disposed, or the like, may be stored in the state database DB.

The identification information of the communication device 20 may be any information, and may be, for example, an IP address, a device name, or a MAC address. In this embodiment, the state data is data relating to a time-series change in a state of the communication device 20. The state of the communication device 20 may also be considered as a load on the communication device 20. The state of the communication device 20 may mean a hardware state, or may mean a software state.

In this embodiment, a case in which the communication amount of the communication device 20 corresponds to the state of the communication device 20 is exemplified, but another state of the communication device 20 may correspond to the state of the communication device 20. As another state, a consumption amount of resources of the communication device 20, a processing time of a request for a service (response time), or the number of errors returned in response to the request may be employed. The state data may be an index called golden signal metrics, or another index used in a publicly-known benchmark test. For example, the state data may be a CPU usage amount, a memory usage amount, a power consumption amount, a communication speed, a temperature, or a combination thereof.

The state data may indicate a state relating to a track record in the communication service or another service. Another service is a service used by a user through the communication service, and is, for example, an electronic commerce service, a travel reservation service, a payment service, or a financial service. For example, the state data may be the number of users who have currently connected to the communication device 20 (who have currently logged into the communication service or another service), payment executed by users via the communication device 20, or orders made by users via the communication device 20. The load on the communication device 20 increases as the number of times of payment, a payment amount, the number of orders, and an order amount increase. Thus, the number of times of payment, the payment amount, the number of orders, and the order amount also correspond to the state of the communication device 20.

In this embodiment, the state data of each of the plurality of communication devices 20 shows the time-series change in the state of the communication device 20. For example, the state data includes a date and time on which the state of the communication device 20 has been acquired and a numerical value indicating the state of the communication device 20 on this date and time. The state of the communication device 20 may be expressed by not the numerical value but another format such as characters. In this embodiment, the communication amount of the communication device 20 corresponds to the state of the communication device 20. Thus, the state data includes the date and time on which the communication amount of the communication device 20 has been acquired and the communication amount of the communication device 20 on this date and time.

The state data of each of the plurality of communication devices 20 may indicate not the time-series change in the state of the communication device 20 but the state at a certain pinpoint timing (one time point). For example, certain state data may show the time-series change in the state, and another piece of state data may indicate the state at the certain pinpoint timing. Through collection of a large number of pieces of state data indicating the state at the certain pinpoint timing, the time-series change in the state may be shown as the whole of the large number of pieces of state data.

The data stored in the data storage unit 100 is not limited to the state database DB. The data storage unit 100 is only required to store certain data relating to the communication service. For example, the data storage unit 100 may store data required for displaying the administrator screen SC on the administrator terminal 40. The data storage unit 100 may store various threshold values used in processing to be described later. The threshold values may be specified by the administrator, or may be decided based on a method of machine learning or a statistical method.

### [State Data Acquisition Module]

The state data acquisition module 101 acquires the state data relating to the state of each of the plurality of communication devices 20 being a monitoring target in the communication service. For example, the state data acquisition module 101 requests each of the plurality of communication devices 20 to transmit the state of the communication device 20, periodically (for example, every approximately one to thirty seconds or approximately one to five minutes). When the communication device 20 receives the request made by the state data acquisition module 101 from the server 10, the communication device 20 transmits its own device identification information and information indicating its own state to the server 10. The state data acquisition module 101 adds a current date and time and the information received from the communication device 20 to the state data associated with the device identification information of this communication device 20.

The communication device 20 may accumulate the state data in a period of a certain length, and transmit the state data to the server 10 at a time. In this case, the state data acquisition module 101 acquires the state data from the communication device 20 at a time, and stores the state data in the state database DB. As another example, the state data acquisition module 101 may irregularly acquire the state data from the communication device 20, instead of periodically. The state data acquisition module 101 may acquire the state data from the communication device 20 at a timing specified by the administrator.

The communication device 20 is an example of the device being the monitoring target in the communication service. The device being the monitoring target may be any device, and is not limited to the communication device 20. The term "communication device 20" as used in this embodiment can be read as "another device being the monitoring target." The "another device" is only required to be a device used in the communication service, and may be, for example, the server 10, another computer other than the server 10, a component such as a CPU, a memory, or a network card included in the server 10 and another computer, a battery, an antenna, a communication cable, or a sensor.

In this embodiment, the state data acquisition module 101 acquires the state data when the anomaly has been detected. The state data acquired when the anomaly has been detected indicates the state in the whole or part of a period from the occurrence of the anomaly to resolution thereof. This period is hereinafter referred to as "anomaly period." The state data may indicate the state in not only the whole or part of the anomaly period but also another period other than the anomaly period. The state data acquisition module 101 may acquire the state data in a period from the occurrence of the anomaly to the resolution thereof, or may acquire the state data ex post facto after the resolution of the anomaly.

In this embodiment, the state at a certain pinpoint timing is not indicated in the state data. The state in a period having a certain length is indicated in the state data. The state data acquisition module 101 may acquire the state data indicating the state in the whole period in the past, but in this embodiment, it is assumed that the state data acquisition module 101 acquires the state data indicating the state in a partial period in the past. For example, the state data acquisition module 101 acquires the state data relating to the time-series change in the state of the device in a period including a time point at which the anomaly has been detected.

### [Clustering Execution Module]

The clustering execution module 108 executes the clustering relating to the state data of each of the plurality of communication devices 20. The clustering is processing of identifying pieces of state data having features similar to each other. The clustering is sometimes called "grouping." The clustering execution module 108 executes the clustering such that pieces of state data having features similar to each other belong to the same cluster. A plurality of pieces of state data belonging to a certain cluster show features similar to each other. The number of clusters may be set in advance, or may be allowed not to be particularly set.

A method itself for the clustering may be a publicly-known method. For example, the clustering execution module 108 may execute the clustering based on k-means, hierarchical clustering, density-based clustering, a Gaussian mixture model, or spectral clustering. As another example, the clustering execution module 108 may execute the clustering based on a machine learning model created by using a method of machine learning. The machine learning model may also be a model created through a publicly-known method. For example, the clustering execution module 108 may execute the clustering by inputting the state data of each of the plurality of communication devices 20 to a model such as a recurrent neural network (RNN), a long short-term memory (LSTM), or a Transformer-based model.

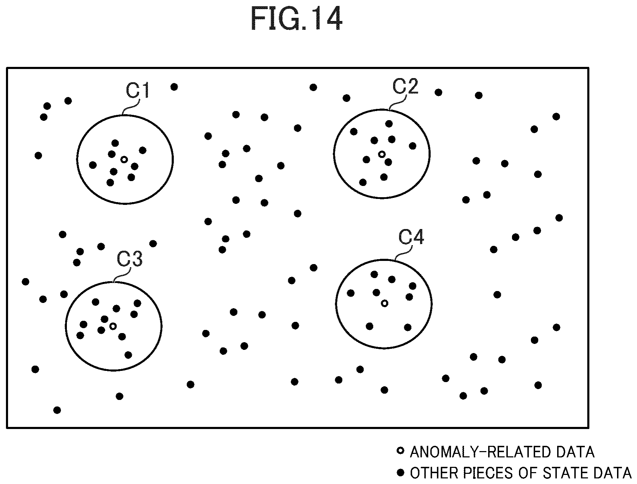

FIG. 14 is a view for illustrating an example of an execution result of the clustering. In FIG. 14, a vector space in which the state data of each of a large number of communication devices 20 is converted into a feature amount is illustrated. White circles in FIG. 14 show anomaly-related data to be described later. Black circles in FIG. 14 show other pieces of state data other than the anomaly-related data. That the circles in FIG. 14 are close to each other means that features thereof are similar to each other. In this embodiment, the time-series change in the state is shown in the state data, and hence the clustering execution module 108 executes the clustering based on the time-series change in the state indicated by the state data of each of the plurality of communication devices 20. For example, the clustering execution module 108 calculates a feature amount of a waveform indicated by each piece of state data.

For example, the clustering execution module 108 calculates the feature amount of the state data in a time domain. The clustering execution module 108 calculates, as the feature amount of certain state data in the time domain, an average value, a variance, a standard deviation, a minimum value, a maximum value, a timing of rising, an average value of a change amount, a maximum value of the change amount, a minimum value of the change amount, or a combination thereof about the time-series change in the state indicated by this state data. The clustering execution module 108 may calculate a period in which the state indicated by certain state data is saturated, the communication amount at the time, a frequency of the saturation, or a combination thereof, as the feature amount of this state data in the time domain. The clustering execution module 108 may calculate the feature amount of the state data in not the time domain but a frequency domain.

For example, the clustering execution module 108 executes the clustering such that pieces of state data having feature amounts similar to each other belong to the same cluster based on the feature amount of each of a plurality of pieces of state data. When a machine learning model is used, the feature amount of the state data is sometimes called "embedding." Substantial processing of the clustering is executed inside the machine learning model. The clustering execution module 108 executes the clustering by inputting each of the plurality of pieces of state data to the machine learning model and acquiring an output from the machine learning model. For example, the output of the machine learning model is data indicating a relationship between each of the plurality of pieces of state data and the cluster to which the state data belongs. A method of unsupervised learning may be used for the clustering. The clustering execution module 108 may execute the clustering based on a method in which a waveform indicated by the state data is captured as an image and whether or not the image is similar is determined.

In this embodiment, the clustering execution module 108 executes the clustering based on the state data of each of the plurality of devices when the anomaly has been detected. For example, the clustering execution module 108 may automatically execute the clustering when the server 10 has detected the anomaly, or may execute the clustering when the administrator of the communication service has performed predetermined operation by the administrator terminal 40. The clustering execution module 108 is only required to execute the clustering after the anomaly is detected. An example in which the clustering is executed before the anomaly is detected is described later in Modification Example 2-1.

In the example of FIG. 14, four pieces of anomaly-related data are specified by the administrator, and the clustering execution module 108 identifies four clusters C1 to C4 by the clustering. For example, the white circle (anomaly-related data) in the cluster C1 is the state data of the communication device 20A in the example of FIG. 10 and FIG. 11. One of the black circles in the cluster C1 is the state data of the communication device 20E in the example of FIG. 10 and FIG. 11. The white circle in each of the other clusters C2 to C4 is the state data of the communication device 20 that has become a factor in the anomaly in another area other than the area X in which the communication device 20A becomes a factor in the anomaly. Also for other areas, the state data of another communication device 20 relevant to the communication device 20 is identified by the clustering. The numbers of pieces of state data belonging to the clusters C1 to C4 may be the same as each other, or may be different from each other.

### [Relevant Data Identification Module]

The relevant data identification module 109 identifies, based on the execution result of the clustering, the relevant data being another piece of state data relevant to the anomaly factor data being the state data relating to the factor in the anomaly in the service. In this embodiment, it is assumed that the administrator specifies which communication device 20 has the state data corresponding to the anomaly factor data. When the server 10 receives, from the administrator terminal 40, information indicating the state data of the communication device 20 specified as the anomaly factor data by the administrator, the server 10 updates the anomaly factor identification information associated with the device identification information of this communication device 20 in the state database DB. In the example of FIG. 13, the server 10 updates the anomaly factor identification information of the communication device 20A such that the anomaly factor identification information indicates that the state data of the communication device 20A is the anomaly factor data relating to the factor in the anomaly in the area X.

The relevant data is the state data identified to have features similar to those of the anomaly factor data by the clustering. In other words, the relevant data is the state data belonging to the same cluster as that to which the anomaly factor data belongs. The relevant data identification module 109 identifies at least one piece of relevant data for one piece of anomaly factor data. When the state data having features similar to those of the anomaly factor data does not exist, the relevant data identification module 109 sometimes identifies no relevant data. The relevant data identification module 109 updates relevance information associated with the state data of the communication device 20 identified as the relevant data in the state database DB. In the example of FIG. 13, the relevant data identification module 109 identifies the state data of the communication device 20E as the relevant data, and thus updates the relevance information associated with the state data of the communication device 20E.

Even when the state data does not belong to the same cluster as that to which the anomaly factor data belongs, the relevant data identification module 109 may identify this state data as the relevant data as long as this state data has somewhat similar features. For example, the relevant data identification module 109 may identify, as the relevant data, the state data that does not belong to the same cluster as that to which the anomaly factor data belongs, but has a feature amount difference (in the example of FIG. 14, distance in the vector space) smaller than a threshold value. Moreover, in a case of calculating the feature amount difference, the relevant data identification module 109 applies a weight (weight parameter) to a more characteristic data point section, to thereby become capable of identifying the relevant data close to more characteristic data. Conversely, the relevant data identification module 109 may be allowed not to identify the state data as the relevant data even when this state data belongs to the same cluster as that to which the anomaly factor data belongs. For example, the relevant data identification module 109 may identify, as the relevant data, a predetermined number of pieces of state data in increasing order of a difference from the feature amount of the anomaly factor data out of a plurality of pieces of state data belonging to the same cluster as that to which the anomaly factor data belongs.

In this embodiment, the relevant data identification module 109 identifies the relevant data when the anomaly has been detected. For example, the relevant data identification module 109 may automatically identify the relevant data when the server 10 has detected the anomaly, or may identify the relevant data when the administrator of the communication service has performed predetermined operation by the administrator terminal 40. The relevant data identification module 109 is only required to identify the relevant data after the anomaly is detected. An example in which the relevant data is identified before the anomaly is detected is described later in Modification Example 2-1.

### [Recovery Processing Execution Module]

The recovery processing execution module 106 executes, when the anomaly has been detected, recovery processing relating to recovery from the anomaly based on the anomaly factor data and the relevant data. The recovery processing is only required to be certain processing related to the anomaly that has occurred. In this embodiment, processing of displaying the state data related to the anomaly in the administrator screen SC corresponds to the recovery processing. The recovery processing may be another kind of processing, and may be, for example, processing of executing a program for recovery prepared in advance or processing of transmitting a notification such as an e-mail to the administrator.

For example, when the anomaly has been detected, the recovery processing execution module 106 transmits display data of the administrator screen SC to the administrator terminal 40 based on the anomaly factor data and the relevant data, to thereby cause the administrator terminal 40 to display the administrator screen SC. The recovery processing execution module 106 causes the administrator screen SC to display an image showing each of the anomaly factor data and the relevant data when the anomaly has been detected.

In the example of FIG. 12, when a certain anomaly has occurred, the recovery processing execution module 106 causes the administrator screen SC to display the state indicated by the state data determined by the relevant data identification module 109 when the same anomaly occurred in the past. In a case in which a certain anomaly has occurred and the state data related to this anomaly has been identified, when the same anomaly occurs, the recovery processing execution module 106 executes the recovery processing based on the state data related to this anomaly.

In the example of the state database DB in FIG. 13, when the anomaly has occurred in the area X, the recovery processing execution module 106 refers to the anomaly factor identification information in the state database DB, and identifies that the state data of the communication device 20A is the anomaly factor data being the factor in this anomaly. Moreover, the recovery processing execution module 106 refers to the relevance identification information in the state database DB, and identifies that the state data of the communication device 20E is the relevant data. The recovery processing execution module 106 generates the display data of the administrator screen SC based on the identified anomaly factor data and relevant data, and transmits the display data to the administrator terminal 40.

### [2-3-2. Functions Implemented in Administrator Terminal]

For example, the administrator terminal 40 includes the data storage unit 400, the operation reception module 401, and the display control module 402. The data storage unit 400 is implemented mainly by the storage unit 42. The operation reception module 401 and the display control module 402 are implemented mainly by the control unit 41.

### [Data Storage Unit]

The data storage unit 400 stores data required for a task of the administrator. For example, the data storage unit 400 stores data required to display the administrator screen SC. The data storage unit 400 may store a maintenance tool required for the task of the administrator. The maintenance tool itself may be a publicly-known tool, and, for example, is only required to be a tool capable of monitoring a state of at least one of hardware or software.

### [Operation Reception Module]

The operation reception module 401 receives various operations executed by the administrator. For example, the operation reception module 401 receives the operation on the administrator screen SC.

### [Display Control Module]

The display control module 402 displays various screens on the display unit 45. For example, the display control module 402 displays the administrator screen SC on the display unit 45.

### [2-4. Processing Executed in Monitoring System]

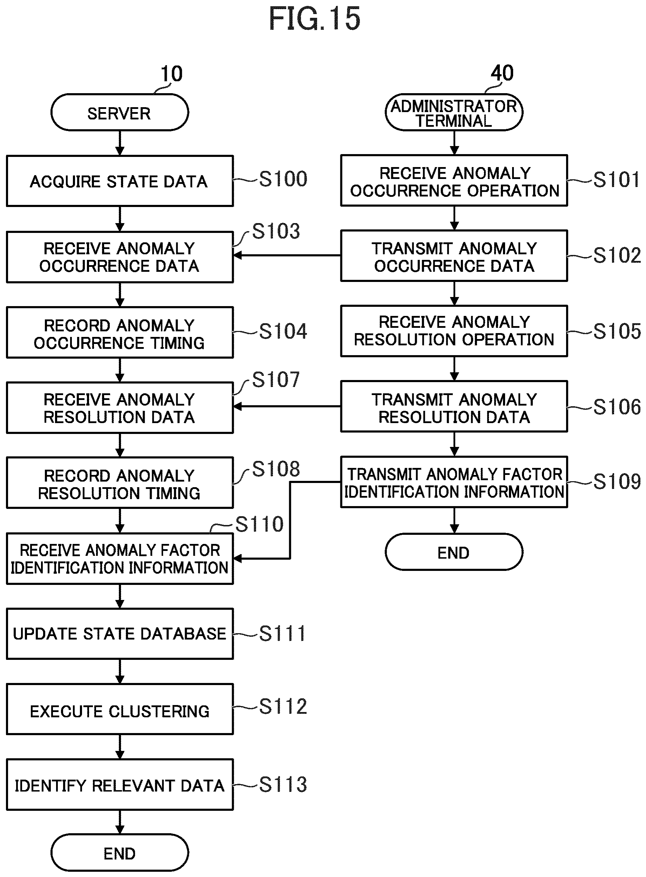

FIG. 15 is a flowchart for illustrating an example of processing executed in the monitoring system 1. The processing of FIG. 15 is executed by the control units 11 and 41 executing programs stored in the storage units 12 and 42, respectively.

As illustrated in FIG. 15, the server 10 communicates with each of the plurality of communication devices 20 to acquire the state data and store the state data in the state database DB (Step S100). The processing of Step S100 is periodically executed. When the anomaly has occurred, the administrator terminal 40 receives the anomaly occurrence operation executed by the administrator (Step S101). The administrator terminal 40 transmits the anomaly occurrence data indicating that the anomaly occurrence operation has been executed, to the server 10 (Step S102). The server 10 receives the anomaly occurrence data from the administrator terminal 40 (Step S103). The server 10 records, in the storage unit 12, a timing of the reception of the anomaly occurrence data as the anomaly occurrence timing at which the anomaly has occurred (Step S104). The administrator may specify the anomaly occurrence timing. In this case, the server 10 records the anomaly occurrence timing specified by the administrator in the storage unit 12.

When the anomaly has been resolved, the administrator terminal 40 receives the anomaly resolution operation executed by the administrator (Step S105). The administrator terminal 40 transmits the anomaly resolution data indicating that the anomaly resolution operation has been executed, to the server 10 (Step S106). The server 10 receives the anomaly resolution data from the administrator terminal 40 (Step S107). The server 10 records, in the storage unit 12, a timing of the reception of the anomaly resolution data as the anomaly resolution timing at which the anomaly has been resolved (Step S108). The administrator may specify the anomaly resolution timing. In this case, the server 10 records the anomaly resolution timing specified by the administrator in the storage unit 12.

The administrator analyzes the state data of each of the plurality of communication devices 20, and identifies the anomaly factor data. When the administrator has specified the anomaly factor data, the administrator terminal 40 transmits the anomaly factor identification information that allows identification of the anomaly factor data, to the server 10 (Step S109). In the example of FIG. 10 and the like, the administrator terminal 40 transmits, to the server 10, the anomaly factor identification information indicating that the state data of the communication device 20A is the anomaly factor data.

When the server 10 receives the anomaly factor identification information from the administrator terminal 40 (Step S110), the server 10 updates the state database DB (Step S111). In the example of FIG. 13, the server 10 updates the anomaly factor identification information associated with the device identification information of the communication device 20A in the state database DB. The server 10 executes the clustering based on the state data of each of the plurality of communication devices 20 (Step S112). The server 10 identifies the relevant data relevant to the anomaly factor data based on an execution result of the clustering (Step S113), and this processing is ended. From then on, when a similar anomaly has occurred, the server 10 executes the recovery processing based on the anomaly factor data and the relevant data.

### [2-5. Summary of Embodiment]

The monitoring system 1 of this embodiment acquires the state data relating to the state of each of the plurality of communication devices 20. The monitoring system 1 executes the clustering relating to the state data of each of the plurality of communication devices 20. The monitoring system 1 identifies the relevant data based on the execution result of the clustering, and thus can identify relevance of the state data of the communication device 20. For example, even when the administrator has failed to notice existence of the relevant data, the monitoring system 1 can identify the relevant data by the clustering. Thus, the administrator can quickly execute recovery at the time of occurrence of the anomaly. The monitoring system 1 can support the task of the administrator.

Further, the monitoring system 1 acquires the state data of each of the plurality of communication devices 20 when the anomaly has been detected. The monitoring system 1 executes the clustering based on the state data of each of the plurality of communication devices 20 when the anomaly has been detected. The monitoring system 1 identifies the relevant data when the anomaly has been detected. The monitoring system 1 executes the recovery processing based on the anomaly factor data and the relevant data when the anomaly has been detected. The monitoring system 1 can quickly achieve recovery from the anomaly in the communication service by the recovery processing. For example, when a similar anomaly has occurred again, the monitoring system 1 can allow the administrator to check the anomaly factor data and the relevant data. Thus, the monitoring system 1 can effectively support the task of the administrator.

Moreover, the monitoring system 1 executes the clustering based on the time-series change in the state indicated by the state data of each of the plurality of communication devices 20. The monitoring system 1 can identify the relevance of the state data from the time-series change in the state of the communication device 20. For example, the monitoring system 1 can execute the recovery processing with a higher accuracy based on the time-series change in the state data by identifying, as the relevant data, the state data having time-series features similar to those of the anomaly factor data.

### [2-6. Modification Examples]

The present disclosure is not limited to the embodiment described above. The present disclosure may appropriately be modified without departing from the purport of the present disclosure.

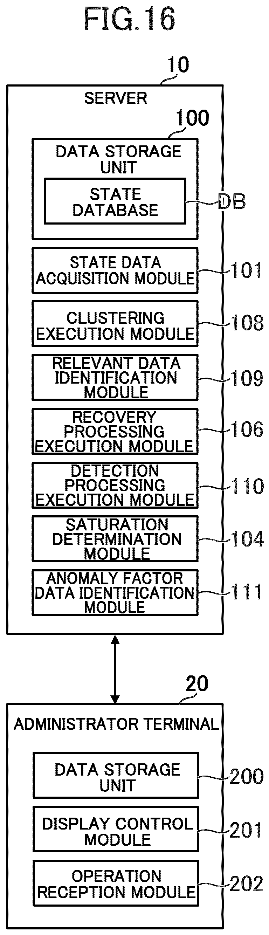

FIG. 16 is a diagram for illustrating an example of functions implemented in the monitoring system 1 in modification examples. The monitoring system 1 in the modification examples includes a detection processing execution module 110, the saturation determination module 104, and an anomaly factor data identification module 111. The detection processing execution module 110, the saturation determination module 104, and the anomaly factor data identification module 111 are implemented by the control unit 11.

### [2-6-1. Modification Example 2-1]

For example, in the embodiment, the case in which a series of processing is executed when the anomaly has been detected has been described, but the series of processing may be executed before the anomaly is detected. In Modification Example 2-1, description is given of a case in which the relevant data identified by the relevant data identification module 109 is used for not the recovery from the anomaly as in the embodiment but detection of the anomaly.

The state data acquisition module 101 in Modification Example 2-1 acquires the state data of each of the plurality of communication devices 20 before the anomaly is detected. A method for the state data acquisition module 101 to acquire the state data is the same as that in the embodiment. The state data acquisition module 101 acquires the state data in real time during operation of the communication service. The state data acquisition module 101 acquires the state data independently of whether or not the anomaly has occurred. For example, even when actually the anomaly has occurred, when a timing is before the anomaly is detected in the monitoring system 1, this timing corresponds to the above-mentioned "before the anomaly is detected."

The clustering execution module 108 in Modification Example 2-1 executes the clustering based on the state data of each of the plurality of communication devices 20 before the anomaly is detected. An execution method for the clustering is also the same as that in the embodiment. The clustering execution module 108 executes the clustering independently of whether or not the anomaly has occurred. The relevant data identification module 109 in Modification Example 2-1 identifies the relevant data before the anomaly is detected. An identification method for the relevant data is also the same as that in the embodiment. The relevant data identification module 109 identifies the relevant data independently of whether or not the anomaly has occurred.

The monitoring system 1 includes the detection processing execution module 110. The detection processing execution module 110 executes detection processing relating to the detection of the anomaly based on the anomaly factor data and the relevant data. The detection processing is only required to be certain processing for detecting the anomaly that has occurred. In Modification Example 2-1, processing of displaying the occurrence of the anomaly in the administrator screen SC corresponds to the detection processing. For example, when the anomaly has been detected, the detection processing execution module 110 causes the administrator screen SC to display an image showing the detection of the anomaly. The detection processing execution module 110 may execute the detection processing by transmitting a notification to the administrator through use of a measure such as an e-mail.

In Modification Example 2-1, it is assumed that a criterion indicating whether or not the anomaly has occurred is associated with each of the anomaly factor data and the relevant data. It is assumed that this criterion is defined based on the anomaly that occurred in the past. For example, the criterion may be a certain threshold value, or may be whether or not saturation has occurred as in Modification Example 2-2 to be described later. The detection processing execution module 110 determines whether or not each of the anomaly factor data and the relevant data satisfies this criterion.

For example, the detection processing execution module 110 executes the detection processing when determining that at least one of the anomaly factor data or the relevant data satisfies this criterion. The detection processing execution module 110 may execute the detection processing when determining that both the anomaly factor data and the relevant data satisfy the above-mentioned criterion. The detection processing execution module 110 may execute the detection processing when determining that only one of the anomaly factor data or the relevant data satisfies the above-mentioned criterion.

The monitoring system 1 of Modification Example 2-1 executes the acquisition of the state data of each of the plurality of communication devices 20, the execution of the clustering, and the identification of the relevant data before the anomaly is detected. The monitoring system 1 executes the detection processing relating to the detection of the anomaly based on the anomaly factor data and the relevant data. With this configuration, the monitoring system 1 can quickly detect the anomaly.

### [2-6-2. Modification Example 2-2]

For example, in the embodiment, the case in which the administrator analyzes the state data and specifies the anomaly factor data has been exemplified. The state data may be analyzed by the monitoring system to be classified as the anomaly factor data. For example, in the communication service, a large number of communication devices 20 exist and various anomalies possibly occur. Thus, it is sometimes difficult for the administrator to identify the communication device 20 being a factor in the anomaly. At this time, the communication device 20 being the factor in the anomaly cannot handle more communication, and hence the communication amount is sometimes saturated.

The phrase "the communication amount is saturated" means that a state in which the communication amount is positive (state in which the communication amount is not 0) is made and the communication amount does not change or does not substantially change. The phrase "the communication amount does not change" means that a change amount of the communication amount is 0. The phrase "the communication amount does not substantially change" means that the change amount of the communication amount is smaller than a threshold value. A specific determination method for the saturation is described later. An upper limit value may be defined for the communication amount. However, there is a case in which the communication device 20 can process a communication amount larger than the upper limit value defined by the administrator. There is also a case in which the communication device 20 can process only a communication amount smaller than the upper limit value defined by the administrator. Moreover, there is also a case in which the administrator itself does not know the upper limit value of the communication device 20. Thus, it is assumed that the upper limit value of the communication amount is not defined. Accordingly, it is assumed that the anomaly is not always detected even when the communication amount of the communication device 20 reaches a certain amount.

In the example of FIG. 10, the communication amount of the communication device 20A is saturated after rapidly increasing. In this period, the communication device 20A cannot process more communication, and hence there is a possibility that the user terminal 30 that has attempted to connect to the communication device 20A in a certain area cannot use the communication service. In Modification Example 2-2, a period from a saturation start timing to a saturation end timing is treated as an example of the period in which the anomaly has occurred. A period from the saturation start timing to a current time point at which the saturation has not ended may be treated as an example of the period in which the anomaly has occurred. For example, a period from the saturation start timing to a time point specified by the administrator may be treated as an example of the period in which the anomaly has occurred.

The monitoring system 1 of Modification Example 2-2 includes the saturation determination module 104 and the anomaly factor data identification module 111. The saturation determination module 104 determines whether or not the state indicated by the state data of the communication device 20 is saturated, based on the state data of each of the plurality of communication devices 20. The saturation determined by the saturation determination module 104 means that a change amount of the state indicated by the state data becomes smaller than a threshold value, or that a state in which this change amount is smaller than this threshold value continues for a predetermined time or longer. In a case in which an upper limit value does not exist in principle as in the communication amount, the change amount mainly means an increase amount when the communication amount increases. Thus, the following situation corresponds to the saturation: the increase amount of the state indicated by the state data becomes smaller than the threshold value after the sum of the change amount increases in a certain period; or a state in which this increase amount is smaller than this threshold value continues for a predetermined time or longer. The change amount may be an integrated value in a period with a certain length, or a change amount between a certain time point and the next time point. The change amount may mean a decrease amount of the communication amount. That is, the saturation determination module 104 determines the saturation based on a time-series change in the change amount itself indicated by the state data.

For example, the saturation determination module 104 determines that the time-series state of the communication device 20 is saturated when a transition is made from a state in which the increase amount of the state indicated by the state data is equal to or larger than the threshold value to a state in which this increase amount is smaller than the threshold value, or to a state in which the state in which this increase amount is smaller than the threshold value has continued for the predetermined time or longer. Even when the state in which the increase amount of the state indicated by the state data is smaller than the threshold value or the state in which the state in which this increase amount is smaller than the threshold value has continued for the predetermined time or longer is made, as long as this increase amount is smaller than the threshold value before that, the saturation determination module 104 determines that the time-series state of the communication device 20 is not saturated. For example, the saturation determination module 104 may determine that the time-series state of the communication device 20 is saturated when the state indicated by the state data is equal to or more than a threshold value and the state in which the increase amount of this state is smaller than the threshold value or the state in which the state in which this increase amount is smaller than the threshold value has continued for the predetermined time or longer is made. Even when the state in which the increase amount of the state indicated by the state data is smaller than the threshold value or the state in which the state in which this increase amount is smaller than the threshold value has continued for the predetermined time or longer is made, as long as this state is less than the threshold value, the saturation determination module 104 determines that the time-series state of the communication device 20 is not saturated.

For example, the saturation determination module 104 determines whether or not the time-series state of the communication device 20 is saturated based on the state data of each of the plurality of communication devices 20 and a threshold value defined in advance. In other words, for each piece of state data of the communication device 20, the saturation determination module 104 determines whether or not the time-series state indicated by the state data is saturated based on the threshold value defined in advance. The threshold value referred to when the saturation determination module 104 determines the saturation may be specified by the administrator, or may be calculated from a tendency of the anomaly in the past. The threshold value may be decided based on a model using a method of machine learning.

The saturation determination module 104 may determine whether or not the state of the communication device 20 is saturated based on the model using the method of machine learning without using the threshold value. In this case, the model has learned training data in which a time-series change in a state indicated by state data for training is treated as an input and a label indicating whether or not this state is saturated is treated as an output. The saturation determination module 104 may input the state data of a determination target to the trained model, and determine whether or not the state of the communication device 20 is saturated based on the label output from the model.

For example, the saturation determination module 104 determines whether or not the time-series state of the certain communication device 20 is saturated by determining whether or not the change amount indicated by the state data of this communication device 20 is equal to or larger than a threshold value. The saturation determination module 104 does not determine that the time-series state of the certain communication device 20 is saturated when determining that the change amount indicated by the state data of this communication device 20 is equal to or larger than the threshold value. The saturation determination module 104 determines that the time-series state of the certain communication device 20 is saturated when determining that the change amount indicated by the state data of this communication device 20 is smaller than the threshold value.

For example, the saturation determination module 104 determines whether or not the time-series state of the certain communication device 20 is saturated by determining whether or not a state in which the change amount indicated by the state data of this communication device 20 is smaller than the threshold value has continued for a predetermined time or longer. The saturation determination module 104 does not determine that the time-series state of the certain communication device 20 is saturated when determining that the state in which the change amount indicated by the state data of this communication device 20 is smaller than the threshold value has not continued for the predetermined time or longer. The saturation determination module 104 determines that the time-series state of the certain communication device 20 is saturated when determining that the state in which the change amount indicated by the state data of this communication device 20 is smaller than the threshold value has continued for the predetermined time or longer.

For example, the saturation determination module 104 determines whether or not the state of the communication device 20 is saturated based on the state data of this communication device 20 when the anomaly has been detected. That is, the saturation determination module 104 determines whether or not the state of the communication device 20 is saturated based on the state data of this communication device 20 after the anomaly has occurred. For example, the saturation determination module 104 determines whether or not the state of the communication device 20 is saturated based on the state data for which the normalization has been executed. The saturation determination module 104 determines whether or not the state of the communication device 20 is saturated based on the state indicated by the state data for which the normalization has been executed.

The saturation determination module 104 may determine whether or not the state is saturated based on the state in a predetermined time window in the state indicated by the state data. The saturation determination module 104 may determine whether or not the state indicated by the state data is saturated independently of the time window. For example, the saturation determination module 104 may determine whether or not the state is saturated based on the state in the reference period in the state indicated by the state data. The saturation determination module 104 may determine whether or not the state is saturated based on the state in the anomaly period in which the anomaly has occurred in the state indicated by the state data. The saturation determination module 104 may determine whether or not the state is saturated based on the state in the whole period indicated by the state data.

The anomaly factor data identification module 111 identifies, as the anomaly factor data, the state data indicating the state of the communication device 20 determined to be saturated out of pieces of state data of the plurality of communication devices 20. In the example of FIG. 10, the state of the communication device 20A shows a tendency of saturation, and hence the anomaly factor data identification module 111 identifies the state data of the communication device 20A as the anomaly factor data. Processing after the anomaly factor data is identified is the same as that in the embodiment.

The monitoring system 1 of Modification Example 2-2 determines whether or not the state of the communication device 20 is saturated based on the state data of each of the plurality of communication devices 20. The monitoring system 1 identifies, as the anomaly factor data, the state data indicating the state determined to be saturated out of pieces of state data of the plurality of communication devices 20. With this configuration, the monitoring system 1 can determine whether or not the state data is related to the anomaly in the communication service. As a result, for example, the monitoring system 1 can hasten the recovery from the anomaly. As another example, it also becomes possible for the monitoring system 1 to quickly detect the anomaly and analyze the factor in the anomaly.

### [2-6-3. Modification Example 2-3]

For example, the state data of each of the plurality of communication devices 20 is generated based on a time managed by the communication device 20. The times managed by the plurality of communication devices 20 sometimes deviate from each other. In this case, time axes of pieces of state data of the plurality of communication devices 20 sometimes deviate from each other. Thus, the clustering execution module 108 may align the time axes of pieces of state data of the plurality of communication devices 20 and then execute the clustering based on the pieces of state data having the time axes aligned.

For example, the clustering execution module 108 acquires a current time managed by the communication device 20 from each of the plurality of communication devices 20. For each communication device 20, the clustering execution module 108 calculates a deviation between the current time managed by the server 10 and the current time managed by the communication device 20. The clustering execution module 108 aligns the time axes of the plurality of communication devices 20 by shifting the time axis of the communication device 20 such that this deviation becomes smaller than a threshold value (for example, such that this deviation becomes 0) for each communication device 20.

For example, it is assumed that the clustering execution module 108 has identified that the time managed by the communication device 20A is 15 seconds ahead of the time managed by the server 10. In this case, the clustering execution module 108 changes the time axis indicated by the state data of the communication device 20A such that the time is set back by 15 seconds as a whole. As another example, it is assumed that the clustering execution module 108 has identified that the time managed by the communication device 20B is 20 seconds behind the time managed by the server 10. In this case, the clustering execution module 108 changes the time axis indicated by the state data of the communication device 20B such that the time is set forward by 20 seconds as a whole.

In Modification Example 2-3, the case in which the time managed by the server 10 serves as a basis has been exemplified, but the clustering execution module 108 may employ the time managed by any one of the plurality of communication devices 20 as the basis. For example, the clustering execution module 108 may employ the time managed by the communication device 20A as the basis. In this case, when it is assumed that the clustering execution module 108 has identified that the time managed by the communication device 20B is 32 seconds ahead of the time managed by the communication device 20A, the clustering execution module 108 changes the time axis indicated by the state data of the communication device 20B such that the time is set back by 32 seconds as a whole. When it is assumed that the clustering execution module 108 has identified that the time managed by the communication device 20C is 26 seconds behind the time managed by the communication device 20A, the clustering execution module 108 changes the time axis indicated by the state data of the communication device 20C such that the time is set forward by 26 seconds as a whole. The clustering execution module 108 does not change the time axis of the communication device 20A.

The monitoring system 1 of Modification Example 2-3 aligns the time axes of pieces of state data of the plurality of communication devices 20, and then executes the clustering based on the pieces of state data having the time axes aligned. In a case in which the time axes of pieces of state data of the plurality of communication devices 20 deviate, even when the pieces of state data originally have features similar to each other, there is a possibility that the pieces of state data are determined not to have features similar to each other because of the deviation of the time axis on the state data. In this respect, the monitoring system 1 can increase an accuracy of identification of the relevant data by aligning the time axes of the pieces of state data of the plurality of communication devices 20.

### [2-6-4. Modification Example 2-4]

For example, even when relevance exists between the state data of the communication device 20A and the state data of the communication device 20B, the communication amount of the communication device 20B possibly rapidly rises after 30 seconds after a rapid rise in the communication amount of the communication device 20A. That is, time lag sometimes occurs in the relevance therebetween. In this case, when the communication amounts at the same time point are compared by the clustering, the communication amounts are sometimes determined to be dissimilar as features. When the clustering execution module 108 compares the state data of the communication device 20B with the state data of the communication device 20A after setting forward a waveform indicated by the state data of the communication device 20B by 30 seconds as a whole, it becomes easier to identify that features of the overall waveform are similar. Thus, the clustering execution module 108 may shift the time axis of the state data of each of the plurality of communication devices 20 and then execute the clustering based on the state data having the time axis shifted.

In Modification Example 2-4, it is assumed that a shift amount indicating how far the time axis is shifted is decided in advance. Moreover, it is assumed that a plurality of shift amounts are defined as the shift amount of the time axis. For example, it is assumed that six shift amounts, that is, 10 seconds, 20 seconds, 30 seconds, 40 seconds, 50 seconds, and 60 seconds, are defined. In the above-mentioned example, assuming that the state data of the communication device 20A is the anomaly factor data, the clustering execution module 108 executes the clustering after setting forward the time axis of the state data of the communication device 20B by 10 seconds. Further, the clustering execution module 108 executes the clustering after setting back the time axis of the state data of the communication device 20B by 10 seconds.

After that, similarly, the clustering execution module 108 executes the clustering after setting forward the time axis of the state data of the communication device 20B by each of 20 seconds, 30 seconds, 40 seconds, 50 seconds, and 60 seconds. Moreover, the clustering execution module 108 executes the clustering after setting back the time axis of the state data of the communication device 20B by each of 20 seconds, 30 seconds, 40 seconds, 50 seconds, and 60 seconds. The clustering execution module 108 executes the clustering after similarly setting forward or back the time axis of the state data by the shift amount defined in advance also for the other communication devices 20 such as the communication device 20C.

The relevant data identification module 109 in Modification Example 2-4 identifies the relevant data based on an execution result of the clustering executed after the time axis is shifted in the above-mentioned manner. For example, the relevant data identification module 109 identifies, as the relevant data, the state data classified into the same cluster as that to which the anomaly factor data belongs, by the clustering based on any one of the above-mentioned plurality of shift amounts. The relevant data identification module 109 may identify, as the relevant data, the state data classified into the same cluster as that to which the anomaly factor data belongs, based on a standard number or more of execution results of the clustering out of the execution results of the clustering based on the above-mentioned plurality of shift amounts.

In the above-mentioned example, the clustering execution module 108 identifies similarity between the state data of the communication device 20A and the state data of the communication device 20B by processing in the case in which the time axis of the state data of the communication device 20B is set forward by 30 seconds as a whole. Thus, even when the time lag as described above exists, the clustering execution module 108 can classify the state data of the communication device 20A and the state data of the communication device 20B into the same cluster. The clustering execution module 108 classifies, into the same cluster, pieces of state data determined to be similar to each other for at least one of the above-mentioned plurality of shift amounts.

The monitoring system 1 of Modification Example 2-4 shifts the time axis of the state data of each of the plurality of communication devices 20, and then executes the clustering based on the state data having the time axes shifted. Even when time lag exists between the anomaly factor data and the relevant data relevant to each other, the monitoring system 1 can absorb the time lag by daring to shift the time axis, and identify the relevant data relevant to the anomaly factor data.

### [2-6-5. Modification Example 2-5]

For example, in Modification Example 2-4, the clustering execution module 108 may decide the shift amount of the time axis based on a partial period in the time-series change in the state indicated by the state data of each of the plurality of communication devices 20, and shift the time axis of the state data of each of the plurality of communication devices 20 based on this decided shift amount. In Modification Example 2-5, the clustering execution module 108 decides the shift amount to be used out of the plurality of shift amounts, by using only part of the period indicated by the state data.

For example, the clustering execution module 108 decides a characteristic period indicated by the anomaly factor data as the above-mentioned partial period. It is assumed that a feature being a basis for deciding this period is defined in advance. In the example of FIG. 10, the state data of the communication device 20A corresponds to the anomaly factor data. In a case in which the timing at which the communication amount of the communication device 20A has rapidly risen indicates a feature of the anomaly, the clustering execution module 108 decides a period including this timing, as the above-mentioned partial period. The administrator may manually specify this period.

For example, for each of the plurality of shift amounts, the clustering execution module 108 compares a state change in the above-mentioned partial period in the state data of the communication device 20A with a state change in the above-mentioned partial period in the state data of another communication device 20. The clustering execution module 108 decides, as the shift amount of the time axis, the shift amount with which a difference in the state change is smallest out of the plurality of shift amounts. The clustering execution module 108 executes the processing described in Modification Example 2-4 based on this decided shift amount, to thereby execute the clustering. The clustering based on the shift amount may be the same as that in Modification Example 2-4.

The monitoring system 1 of Modification Example 2-5 decides the shift amount of the time axis based on the partial period in the time-series change in the state indicated by the state data of each of the plurality of communication devices 20, and shifts the time axis of the state data of each of the plurality of communication devices 20 based on this decided shift amount. Even when time lag exists between the anomaly factor data and the relevant data relevant to each other, the monitoring system 1 can absorb the time lag by shifting the time axis with the optimum shift amount, and identify the relevant data relevant to the anomaly factor data. The monitoring system 1 is not required to execute processing based on the unnecessary shift amount, and hence a processing load can be reduced.

### [2-6-6. Modification Example 2-6]

For example, the clustering execution module 108 may calculate a difference in a value indicated by the state data of each of the plurality of communication devices 20 and execute the clustering based on this calculated difference. In the example of FIG. 10, the clustering execution module 108 calculates the difference between the anomaly factor data being the state data of the communication device 20A and the state data of each of the communication devices 20B to 20E. A publicly-known index such as the Mahalanobis distance may be used as this difference. The clustering execution module 108 classifies the state data in which a change amount of this difference is smaller than a threshold value, into the same cluster as that to which the anomaly factor data belongs.

In the example of FIG. 10, a state in which the difference between the anomaly factor data being the state data of the communication device 20A and the state data of the communication device 20E falls within a certain range continues. Thus, the clustering execution module 108 classifies the anomaly factor data and the state data of the communication device 20E into the same cluster. That is, even when a certain level of difference from the anomaly factor data exists, the clustering execution module 108 classifies the state data into the same cluster as that to which the anomaly factor data belongs, as long as this difference falls within the certain range in this state data. The clustering execution module 108 may execute the clustering based on not the change amount but only this difference. Processing after the clustering is executed is as described in the embodiment.

The monitoring system 1 of Modification Example 2-6 calculates the difference in the value indicated by the state data of each of the plurality of communication devices 20, and executes the clustering based on this calculated difference. With this configuration, the monitoring system 1 can execute the clustering with attention paid to the difference indicated by the state data of each of the plurality of communication devices 20, and increase an accuracy of the clustering.

### [2-6-7. Modification Example 2-7]

For example, depending on the communication device 20, part of the state data is sometimes not acquired due to so-called node down such as forced reboot or shutdown. In this case, the state data acquisition module 101 may acquire the state data such that corresponding all or corresponding part of the communication devices 20 from which part of the state data has not been acquired out of the plurality of communication devices 20 indicates a predetermined value. The predetermined value may be a value specified by the administrator in advance, or may be dynamically calculated on the spot.

It is assumed that, in the example of FIG. 10, part of the state data of the communication device 20B is deficient due to forced reboot of the communication device 20B. In this case, the state data acquisition module 101 may fill the deficient part with an average value of a part that is not deficient in the state data. The state data acquisition module 101 may fill the deficient part in the state data with a value specified by the administrator. Filling this part is sometimes called "padding." A publicly-known padding method can be used as a method itself for filling the deficient part.

The monitoring system 1 of Modification Example 2-7 acquires the state data such that corresponding all or corresponding part of the communication devices 20 from which part of the state data has not been acquired out of the plurality of communication devices 20 indicates the predetermined value. With this configuration, the monitoring system 1 can execute the clustering even when part of the state data is deficient.

### [2-6-8. Modification Example 2-8]

For example, the clustering execution module 108 may execute the clustering based on the state data of each of the plurality of communication devices 20 and an attribute associated with the state data. The attribute is only required to be information that allows classification of the state data from a certain viewpoint. In Modification Example 2-8, a case in which the attribute indicates a place in which each of the plurality of communication devices 20 is disposed is exemplified. The place may be a somewhat large range such as a city, a town, or a village, or a somewhat small range such as a building, a room, or a rack in which the communication device 20 exists. The attribute is not limited to the place in which the communication device 20 is disposed, and may be, for example, performance, a role, or a kind of the communication device 20. The attribute may be content meant by the state data, or an acquisition condition of the state data, such as a sampling cycle. It is assumed that data indicating the attribute of the communication device 20 is stored in the data storage unit 100 in advance.

For example, the clustering execution module 108 executes the clustering based on the state data of each of the plurality of communication devices 20 and the place associated with the state data. The clustering execution module 108 executes the clustering based on the state data of each of the plurality of communication devices 20 disposed at the same place. Even when features of pieces of state data of the plurality of communication device 20 are similar to each other, the clustering execution module 108 keeps those pieces of state data from belonging to the same cluster when those communication devices 20 are disposed at different places. The clustering execution module 108 executes the clustering among the plurality of communication devices 20 disposed at the same place absolutely.

The clustering in a case in which the attribute other than the place is used may also be executed through the same method as the above-mentioned method. For example, the clustering execution module 108 executes the clustering based on the state data of each of the plurality of communication devices 20 with which the same attribute is associated. Even when features of pieces of state data of the plurality of communication device 20 are similar to each other, the clustering execution module 108 keeps those pieces of state data of those communication devices 20 from belonging to the same cluster when different attributes are associated with those pieces of state data. The clustering execution module 108 executes the clustering among the plurality of communication devices 20 having the state data with which the same attribute is associated absolutely. Processing after the clustering is executed is the same as that in the embodiment.

The monitoring system 1 of Modification Example 2-8 executes the clustering based on the state data of each of the plurality of communication devices 20 and the attribute associated with the state data. With this configuration, the monitoring system 1 can execute the clustering in consideration of the attribute of the state data, and hence the accuracy of the clustering can be increased. For example, the monitoring system 1 can accurately identify relevance between pieces of state data by executing the clustering among the plurality of communication devices 20 having the state data with which the same attribute is associated.

Further, the monitoring system 1 executes the clustering based on the state data of each of the plurality of communication devices 20 and the place associated with the state data. With this configuration, the monitoring system 1 can execute the clustering in consideration of the place in which the communication device 20 is disposed, and hence the accuracy of the clustering can be increased. For example, the monitoring system 1 can accurately identify relevance between pieces of state data by executing the clustering among the plurality of communication devices 20 disposed at the same place.

### [2-6-9. Modification Example 2-9]

For example, in Modification Example 2-9, the clustering execution module 108 may average time-series data based on the state data of each of the plurality of communication devices 20 at a predetermined time interval. For example, when the state data is acquired at a frequency of one piece/one second, the number of pieces of state data is 3,600 pieces/60 minutes. When those pieces of state data are averaged at an interval of one minute, 3,600 pieces/60 minutes of state data are reduced to 60 pieces of state data. The clustering execution module 108 in Modification Example 2-9 can create lightweight time-series data similar to the time-series data before averaging, by executing the averaging of the state data in advance, and reduce a processing load of the clustering.

### [2-6-10. Other Modification Examples]

For example, the above-mentioned modification examples may be combined with one another.

For example, the monitoring system 1 may detect an anomaly in a service based on a post on an SNS. In this case, the monitoring system 1 acquires post data relating to the post on the SNS. The post data may be a text, an image, a moving image, a hashtag, or a combination thereof. The monitoring system 1 detects the anomaly based on the number of posts including a name of the service being a monitoring target. The monitoring system 1 detects the anomaly when the number of posts has become equal to or larger than a threshold value. The relevant data identification module 109 may identify relevance between the post data in the SNS and the state data of the communication device 20. For example, the relevant data identification module 109 may identify that relevance exists between the post data in the SNS and the state data of the communication device 20 when a correlation exists between a timing at which the number of posts on the SNS has increased and a timing at which a load indicated by the state data of the communication device 20 has increased.

For example, the monitoring system 1 can be applied also to another service other than the communication service. For example, the monitoring system 1 may identify the relevant data relevant to the anomaly factor data being a factor in an anomaly in another service such as an electronic commerce service, a travel reservation service, a financial service, a payment service, an online flea market service, or a video distribution service. A device being a monitoring target is only required to be a device used in those services, and is not limited to the communication device as in the embodiment. For example, the device being the monitoring target may be a server computer, a personal computer, a tablet, a power supply device, a printer, a scanner, or another device.

For example, in the embodiment, the case in which the main processing is executed in the server 10 has been described, but the processing described as the processing executed in the server 10 may be executed in the administrator terminal 40 or another computer, or may be distributed to a plurality of computers.

### [3. Supplementary Notes]

For example, the monitoring system may have the following configurations.

### [3-1. Supplementary Notes relating to First Embodiment]

(1-1) A monitoring system, including:
   a state data acquisition module configured to acquire state data relating to a time-series change in a state of a device that is a monitoring target in a service;
   a saturation determination module configured to determine whether the state is saturated based on the state data; and
   a relation determination module configured to determine whether the state data is related to an anomaly in the service based on a determination result obtained by the saturation determination module.
(1-2) The monitoring system according to Item (1-1),
   wherein the state data acquisition module is configured to acquire the state data when the anomaly has been detected,
   wherein the saturation determination module is configured to determine whether the state is saturated based on the state data when the anomaly has been detected,
   wherein the relation determination module is configured to determine whether the state data is related to the anomaly when the anomaly has been detected, and
   wherein the monitoring system further includes a recovery processing execution module configured to execute, when the anomaly has been detected, recovery processing relating to recovery from the anomaly based on the state data determined to be related to the anomaly.
(1-3) The monitoring system according to Item (1-1) or (1-2),
   wherein the state data acquisition module is configured to acquire the state data before the anomaly is detected,
   wherein the saturation determination module is configured to determine whether the state is saturated based on the state data before the anomaly is detected,
   wherein the relation determination module is configured to determine whether the state data is related to the anomaly before the anomaly is detected, and
   wherein the monitoring system further includes a detection processing execution module configured to execute detection processing relating to detection of the anomaly based on the state data determined to be related to the anomaly.
(1-4) The monitoring system according to any one of Items (1-1) to (1-3),
   wherein the state data acquisition module is configured to acquire the state data of the device in each of a plurality of the services,
   wherein the saturation determination module is configured to determine whether the device involves saturation based on the state data of the device in each of the plurality of the services, and
   wherein the relation determination module is configured to determine whether the state data is related to the anomaly in each of the plurality of the services based on the determination result obtained by the saturation determination module.
(1-5) The monitoring system according to any one of Items (1-1) to (1-4), further including a period setting module configured to set a period relating to the state data based on an anomaly occurrence timing at which the anomaly has occurred when the anomaly has been detected,
   wherein the state data acquisition module is configured to acquire the state data relating to the time-series change in the state of the device in the period.
(1-6) The monitoring system according to any one of Items (1-1) to (1-5), further including a normalization execution module configured to execute normalization relating to the state data,
   wherein the saturation determination module is configured to determine whether the state is saturated based on the state data for which the normalization has been executed.
(1-7) The monitoring system according to any one of Items (1-1) to (1-6), wherein the relation determination module is configured to determine whether the state data is related to the anomaly based on a saturation period in which the state has been determined to be saturated in a period in which the change has been shown in the state data.
(1-8) The monitoring system according to any one of Items (1-1) to (1-7), wherein the relation determination module is configured to determine whether the state data is related to the anomaly based on a highest value of the state in another period before an anomaly period in which the anomaly has occurred in a period in which the change has been shown in the state data.
(1-9) The monitoring system according to Item (1-8),
   wherein the another period is a period before the anomaly period, and
   wherein the relation determination module is configured to determine whether the state data is related to the anomaly based on a highest value of the state in the another period and a highest value of the state in a period before the another period.
(1-10) The monitoring system according to any one of Items (1-1) to (1-9), wherein the relation determination module is configured to determine whether the state data is related to the anomaly based on a highest value of the state indicated by the state data in an anomaly period in which the anomaly has occurred in a period in which the change has been shown in the state data.
(1-11) The monitoring system according to any one of Items (1-1) to (1-10), wherein the relation determination module is configured to determine whether the state data is related to the anomaly based on a degree of coincidence between an anomaly period in which the anomaly has occurred and a saturation period in which the state has been determined to be saturated in a period in which the change has been shown in the state data.
(1-12) The monitoring system according to any one of Items (1-1) to (1-11), wherein the relation determination module is configured to determine whether the state data is related to the anomaly based on a change amount of the state in each of a saturation period in which the state is saturated and another period before an anomaly period in which the anomaly has occurred in a period in which the change has been shown in the state data.

### [3-2. Supplementary Notes relating to Second Embodiment]

(2-1) A monitoring system, including:
   a state data acquisition module configured to acquire state data relating to a state of each of a plurality of devices that is a monitoring target in a service;
   a clustering execution module configured to execute clustering relating to the state data of each of the plurality of devices; and
   a relevant data identification module configured to identify, based on an execution result of the clustering, relevant data that is another piece of the state data relevant to anomaly factor data that is the state data relating to a factor in an anomaly in the service.
(2-2) The monitoring system according to Item (2-1),
   wherein the state data acquisition module is configured to acquire the state data of each of the plurality of devices when the anomaly has been detected,
   wherein the clustering execution module is configured to execute the clustering based on the state data of each of the plurality of devices when the anomaly has been detected,
   wherein the relevant data identification module is configured to identify the relevant data when the anomaly has been detected, and
   wherein the monitoring system further includes a recovery processing execution module configured to execute, when the anomaly has been detected, recovery processing relating to recovery from the anomaly based on the anomaly factor data and the relevant data.
(2-3) The monitoring system according to Item (2-1) or (2-2),
   wherein the state data acquisition module is configured to acquire the state data of each of the plurality of devices before the anomaly is detected,
   wherein the clustering execution module is configured to execute the clustering based on the state data of each of the plurality of devices before the anomaly is detected,
   wherein the relevant data identification module is configured to identify the relevant data before the anomaly is detected, and
   wherein the monitoring system further includes a detection processing execution module configured to execute detection processing relating to detection of the anomaly based on the anomaly factor data and the relevant data.
(2-4) The monitoring system according to any one of Items (2-1) to (2-3),
   wherein the state data of each of the plurality of devices indicates a time-series change in the state of the device, and
   wherein the clustering execution module is configured to execute the clustering based on the time-series change in the state indicated by the state data of each of the plurality of devices.
(2-5) The monitoring system according to Item (2-4), further including:
   a saturation determination module configured to determine, based on the state data of each of the plurality of devices, whether the state indicated by the state data is saturated; and
   an anomaly factor data identification module configured to identify, as the anomaly factor data, the state data indicating the state determined to be saturated out of pieces of the state data of the plurality of devices.
(2-6) The monitoring system according to Item (2-4) or (2-5), wherein the clustering execution module is configured to align time axes of pieces of the state data of the plurality of devices, and then execute the clustering based on the pieces of the state data having the time axes aligned.
(2-7) The monitoring system according to any one of Items (2-4) to (2-6), wherein the clustering execution module is configured to shift time axes of pieces of the state data of the plurality of devices, and then execute the clustering based on the pieces of the state data having the time axes shifted.
(2-8) The monitoring system according to Item (2-7), wherein the clustering execution module is configured to decide a shift amount of the time axis based on a partial period in the time-series change in the state indicated by the state data of each of the plurality of devices, and shift the time axis of the state data of each of the plurality of devices based on the decided shift amount.
(2-9) The monitoring system according to any one of Items (2-1) to (2-8), wherein the clustering execution module is configured to calculate a difference in a value indicated by the state data of each of the plurality of devices and execute the clustering based on the calculated difference.
(2-10) The monitoring system according to any one of Items (2-1) to (2-9), wherein the state data acquisition module is configured to acquire the state data such that corresponding all or corresponding part of the devices from which part of the state data has not been acquired out of the plurality of devices indicates a predetermined value.
(2-11) The monitoring system according to any one of Items (2-1) to (2-10), wherein the clustering execution module is configured to execute the clustering based on the state data of each of the plurality of devices and an attribute associated with the state data.
(2-12) The monitoring system according to Item (2-11),
   wherein the attribute indicates a place in which each of the plurality of devices is disposed, and
   wherein the clustering execution module is configured to execute the clustering based on the state data of each of the plurality of devices and the place associated with the state data.

## Claims

1. A monitoring system, comprising:
a state data acquisition module configured to acquire state data relating to a state of a device that is a monitoring target in a service,
wherein the monitoring system is configured to execute processing relating to an anomaly in the service based on the state data.

2. The monitoring system according to claim 1,
wherein the state data acquisition module is configured to acquire the state data relating to a time-series change in the state of the device, and
wherein the monitoring system further comprises:
a saturation determination module configured to determine whether the state is saturated based on the state data; and
a relation determination module configured to determine whether the state data is related to the anomaly in the service based on a determination result obtained by the saturation determination module.

3. The monitoring system according to claim 2,
wherein the state data acquisition module is configured to acquire the state data when the anomaly has been detected,
wherein the saturation determination module is configured to determine whether the state is saturated based on the state data when the anomaly has been detected,
wherein the relation determination module is configured to determine whether the state data is related to the anomaly when the anomaly has been detected, and
wherein the monitoring system further comprises a recovery processing execution module configured to execute, when the anomaly has been detected, recovery processing relating to recovery from the anomaly based on the state data determined to be related to the anomaly.

4. The monitoring system according to claim 2 or 3,
wherein the state data acquisition module is configured to acquire the state data before the anomaly is detected,
wherein the saturation determination module is configured to determine whether the state is saturated based on the state data before the anomaly is detected,
wherein the relation determination module is configured to determine whether the state data is related to the anomaly before the anomaly is detected, and
wherein the monitoring system further comprises a detection processing execution module configured to execute detection processing relating to detection of the anomaly based on the state data determined to be related to the anomaly.

5. The monitoring system according to claim 2 or 3,
wherein the state data acquisition module is configured to acquire the state data of the device in each of a plurality of the services,
wherein the saturation determination module is configured to determine whether the device involves saturation based on the state data of the device in each of the plurality of the services, and
wherein the relation determination module is configured to determine whether the state data is related to the anomaly in each of the plurality of the services based on the determination result obtained by the saturation determination module.

6. The monitoring system according to claim 2 or 3, further comprising a period setting module configured to set a period relating to the state data based on an anomaly occurrence timing at which the anomaly has occurred when the anomaly has been detected,
wherein the state data acquisition module is configured to acquire the state data relating to the time-series change in the state of the device in the period.

7. The monitoring system according to claim 2 or 3, further comprising a normalization execution module configured to execute normalization relating to the state data,
wherein the saturation determination module is configured to determine whether the state is saturated based on the state data for which the normalization has been executed.

8. The monitoring system according to claim 2 or 3, wherein the relation determination module is configured to determine whether the state data is related to the anomaly based on a saturation period in which the state has been determined to be saturated in a period in which the change has been shown in the state data.

9. The monitoring system according to claim 2 or 3, wherein the relation determination module is configured to determine whether the state data is related to the anomaly based on a highest value of the state in another period before an anomaly period in which the anomaly has occurred in a period in which the change has been shown in the state data.

10. The monitoring system according to claim 7,
wherein the another period is a period before the anomaly period, and
wherein the relation determination module is configured to determine whether the state data is related to the anomaly based on a highest value of the state in the another period and a highest value of the state in a period before the another period.

11. The monitoring system according to claim 2 or 3, wherein the relation determination module is configured to determine whether the state data is related to the anomaly based on a highest value of the state indicated by the state data in an anomaly period in which the anomaly has occurred in a period in which the change has been shown in the state data.

12. The monitoring system according to claim 2 or 3, wherein the relation determination module is configured to determine whether the state data is related to the anomaly based on a degree of coincidence between an anomaly period in which the anomaly has occurred and a saturation period in which the state has been determined to be saturated in a period in which the change has been shown in the state data.

13. The monitoring system according to claim 2 or 3, wherein the relation determination module is configured to determine whether the state data is related to the anomaly based on a change amount of the state in each of a saturation period in which the state is saturated and another period before an anomaly period in which the anomaly has occurred in a period in which the change has been shown in the state data.

14. The monitoring system according to claim 1,
wherein the state data acquisition module is configured to acquire the state data relating to the state of each of a plurality of the devices, and
wherein the monitoring system further comprises:
a clustering execution module configured to execute clustering relating to the state data of each of the plurality of the devices; and
a relevant data identification module configured to identify, based on an execution result of the clustering, relevant data that is another piece of the state data relevant to anomaly factor data that is the state data relating to a factor in the anomaly in the service.

15. The monitoring system according to claim 14,
wherein the state data acquisition module is configured to acquire the state data of each of the plurality of the devices when the anomaly has been detected,
wherein the clustering execution module is configured to execute the clustering based on the state data of each of the plurality of the devices when the anomaly has been detected,
wherein the relevant data identification module is configured to identify the relevant data when the anomaly has been detected, and
wherein the monitoring system further comprises a recovery processing execution module configured to execute, when the anomaly has been detected, recovery processing relating to recovery from the anomaly based on the anomaly factor data and the relevant data.

16. The monitoring system according to claim 14 or 15,
wherein the state data acquisition module is configured to acquire the state data of each of the plurality of the devices before the anomaly is detected,
wherein the clustering execution module is configured to execute the clustering based on the state data of each of the plurality of the devices before the anomaly is detected,
wherein the relevant data identification module is configured to identify the relevant data before the anomaly is detected, and
wherein the monitoring system further comprises a detection processing execution module configured to execute detection processing relating to detection of the anomaly based on the anomaly factor data and the relevant data.

17. The monitoring system according to claim 14 or 15,
wherein the state data of each of the plurality of the devices indicates a time-series change in the state of the device, and
wherein the clustering execution module is configured to execute the clustering based on the time-series change in the state indicated by the state data of each of the plurality of the devices.

18. The monitoring system according to claim 17, further comprising:
a saturation determination module configured to determine, based on the state data of each of the plurality of the devices, whether the state indicated by the state data is saturated; and
an anomaly factor data identification module configured to identify, as the anomaly factor data, the state data indicating the state determined to be saturated out of pieces of the state data of the plurality of the devices.

19. The monitoring system according to claim 17, wherein the clustering execution module is configured to align time axes of pieces of the state data of the plurality of the devices, and then execute the clustering based on the pieces of the state data having the time axes aligned.

20. The monitoring system according to claim 17, wherein the clustering execution module is configured to shift time axes of pieces of the state data of the plurality of the devices, and then execute the clustering based on the pieces of the state data having the time axes shifted.

21. The monitoring system according to claim 20, wherein the clustering execution module is configured to decide a shift amount of the time axis based on a partial period in the time-series change in the state indicated by the state data of each of the plurality of the devices, and shift the time axis of the state data of each of the plurality of the devices based on the decided shift amount.

22. The monitoring system according to claim 14 or 15, wherein the clustering execution module is configured to calculate a difference in a value indicated by the state data of each of the plurality of the devices and execute the clustering based on the calculated difference.

23. The monitoring system according to claim 14 or 15, wherein the state data acquisition module is configured to acquire the state data such that corresponding all or corresponding part of the devices from which part of the state data has not been acquired out of the plurality of the devices indicates a predetermined value.

24. The monitoring system according to claim 14 or 15, wherein the clustering execution module is configured to execute the clustering based on the state data of each of the plurality of the devices and an attribute associated with the state data.

25. The monitoring system according to claim 24,
wherein the attribute indicates a place in which each of the plurality of the devices is disposed, and
wherein the clustering execution module is configured to execute the clustering based on the state data of each of the plurality of the devices and the place associated with the state data.

26. A monitoring method, comprising:
a state data acquisition step of acquiring state data relating to a state of a device that is a monitoring target in a service; and
executing processing relating to an anomaly in the service based on the state data.

27. A program for causing a computer to:
function as a state data acquisition module configured to acquire state data relating to a state of a device that is a monitoring target in a service; and
execute processing relating to an anomaly in the service based on the state data.
